# EUROPEAN PATENT APPLICATION

(11) **EP 4 657 812 A1**
(43) Date of publication of application: **03.12.2025**
(21) Application number: 23922283.9
(22) Date of filing: 31.08.2023
(51) Int. Cl.: H04L 41/0816, G06F 9/50, G06F 9/455

(54) **RESOURCE CONFIGURATION METHOD AND APPARATUS, AND SYSTEM AND DEVICE**

(30) Priority: 15.02.2023 CN 202310140549
(71) Applicant: Huawei Technologies Co., Ltd., Shenzhen, Guangdong 518129 (CN)
(72) Inventor: WEI, Xin, Shenzhen, Guangdong 518129 (CN); LENG, Zhenyu, Shenzhen, Guangdong 518129 (CN); DONG, Yingying, Shenzhen, Guangdong 518129 (CN)
(74) Representative: Körber, Martin Hans
(86) International application number: PCT/CN2023/116296
(87) International publication number: WO 2024/169161

(57) **Abstract**

A resource configuration method and apparatus, a system, and a device are provided. In this application, a computing system in a CDI infrastructure includes a host and a network resource. After completing initial resource configuration of the host, a system management module obtains host resource update information configured by a user. The host resource update information indicates a network resource that needs to be allocated to the host. In a process in which the host is not shut down and is still running, the system management module adjusts, based on the host resource update information, a network resource allocated to the host, where the network resource allocated to the host is used to perform data transmission with the host or carry a data processing task that needs to be executed by the host. The network resource of the host is allowed to be dynamically adjusted when the host is not shut down, so that resource utilization can be improved. In addition, an adjusted network resource of the host better meets expectation of the user, and user experience can be effectively improved.

## Description

### CROSS-REFERENCE TO RELATED APPLICATIONS

This application claims priority to Chinese Patent Application No. 202310140549.X, filed with the China National Intellectual Property Administration on February 15, 2023 and entitled "RESOURCE CONFIGURATION METHOD AND APPARATUS, SYSTEM, AND DEVICE", which is incorporated herein by reference in its entirety.

### TECHNICAL FIELD

This application relates to the field of communication technologies, and in particular, to a resource configuration method and apparatus, a system, and a device.

### BACKGROUND

A composable disaggregated infrastructure (composable disaggregated infrastructure, CDI) is an organizational architecture of a data center. In a CDI-based data center, a computing resource, a storage resource, and a network resource are allowed to be independently distributed on different devices. The computing resource, the storage resource, and the network resource can be configured for a host by using software, to form "nodes" with processing functions. The "nodes" can operate as computing devices in a hardware form.

For the network resource such as a network interface card, in the CDI-based data center, only a fixed quantity of network resources can be allocated to the host by using software. Once the network resource is configured for the host by using software, in a subsequent running process of the host, the quantity of network resources cannot be adjusted, flexibility is poor, and resource utilization is low.

### SUMMARY

This application provides a resource configuration method and apparatus, a system, and a device, to improve utilization of a network resource in a CDI.

According to a first aspect, an embodiment of this application provides a resource configuration method. According to the method, a network resource can be allocated to a host in a CDI-based computing system. In addition to the host, the computing system further includes a network resource. In the method, a system management module may complete initial resource configuration of the host, and allocate the network resource to the host. After completing the initial resource configuration of the host, the system management module can further obtain host resource update information configured by a user, where the host resource update information indicates a network resource that needs to be allocated to the host. In a process in which the host is not shut down and is still running, the system management module adjusts, based on the host resource update information, a network resource allocated to the host, where the network resource allocated to the host is used to perform data transmission with the host or carry a data processing task that needs to be executed by the host.

According to the foregoing method, in the computing system, after the initial resource configuration of the host is completed, the network resource of the host is allowed to be dynamically adjusted when the host is not shut down, so that resource utilization can be improved. In addition, the adjusted network resource of the host better meets expectation of the user, and user experience can be effectively improved.

In a possible implementation, the system management module may further provide a part or all of the following information for the user:
occupation of the network resource in the computing system and the network resource configured for the host. A part or all of the information may be presented to the user and browsed by the user. For example, the system management module may provide a part or all of the information for a system management client deployed on a user side, and the system management client presents the information to the user.

According to the foregoing method, a part or all of the information is provided, so that the user can accurately learn of the network resource of the host or an idle network resource in the computing system in a timely manner, and the user adjusts the network resource of the host based on an actual requirement, and configures the host resource update information.

In a possible implementation, the user is allowed to configure shared information, to indicate whether the network resource in the computing system supports sharing. The system management module may obtain the shared information configured by the user, and configure a shared resource (for example, a shared network interface card mentioned in this embodiment of this application) for the network resource of the host based on the shared information. The shared resource is a network resource, in the computing system, that is not configured for the host and that supports sharing, and the shared resource is used to share a data transmission task or a data processing task of the network resource of the host.

According to the foregoing method, the resource, in the computing system, that is not allocated to the host and that supports sharing can help the network resource of the host undertake some tasks, to ensure effective execution of the data transmission task or the data processing task of the host, and further improve utilization of the network resource in the computing system.

In a possible implementation, a connection is established in the computing system based on a CXL bus, and a shared memory is allowed to be set on the CXL bus. In this way, all devices connected to the CXL bus can access the shared memory. In the computing system, the shared resource and the network resource of the host may implement exchange of the data transmission task or the data processing task by using the shared memory on the CXL bus.

According to the foregoing method, existence of the shared memory enables efficient exchange of the data transmission task or the data processing task between the shared resource and the network resource of the host.

In a possible implementation, the network resource includes a plurality of intelligent network interface cards, and the intelligent network interface card includes a processor core and a virtual network interface card; and the system management module may complete the initial resource configuration of the host by performing a part or all of the following actions:
Action 1: Allocate the virtual network interface card on the intelligent network interface card to the host, where the virtual network interface card is configured to perform data transmission with the host.
Action 2: Configure a control plane function that needs to be undertaken by the processor core, where the control plane function includes a part or all of the following: managing the virtual network interface card, carrying the data processing task that needs to be executed by the host, and scheduling, for the virtual network interface card, data that needs to be transmitted (that is, being responsible for I/O scheduling of the virtual network interface card).

In specific implementation, a chassis management module may be further deployed in a resource chassis in which the network resource is located, and by interacting with the chassis management module, the system management module may complete the initial resource configuration of the host. For example, the system management module may send a resource allocation request to the chassis management module based on host resource information, where the resource allocation request carries a resource parameter, and the resource parameter indicates a network resource that needs to be allocated to the host.

After receiving the resource allocation request, the chassis management module allocates the virtual network interface card on the intelligent network interface card to the host based on the resource parameter, and configures the control plane function that needs to be undertaken by the processor core.

According to the foregoing method, the system management module (or the system management module and the chassis management module) can complete network resource configuration of the host at a granularity of the virtual network interface card and the processor core. The granularity of the configuration is more specific, and can better meet a requirement of an actual scenario.

In a possible implementation, when allocating the virtual network interface card to the host, the system management module may allocate a plurality of virtual network interface cards to the host, where the plurality of virtual network interface cards include two virtual network interface cards on different intelligent network interface cards.

According to the foregoing method, the virtual network interface cards allocated to the host can be distributed on different intelligent network interface cards. To be specific, deployment positions of the virtual network interface cards of the host are not limited, and a configuration manner of the virtual network interface cards is more flexible.

In a possible implementation, when adjusting, based on the host resource update information, the network resource allocated to the host, the system management module may perform a part or all of the following actions:
Action 1: Adjust, based on the host resource update information, the virtual network interface cards allocated to the host.
Action 2: Adjust, based on the host resource update information, the control plane function that needs to be undertaken by the processor core.

In specific implementation, a chassis management module may be further deployed in a resource chassis in which the network resource is located, and by interacting with the chassis management module, the system management module may adjust the network resource allocated to the host. For example, the system management module sends a resource adjustment request to the chassis management module based on the host resource update information, where the resource adjustment request carries a resource adjustment parameter, and the resource adjustment parameter indicates a network resource that needs to be adjusted for the host. The chassis management module receives the resource adjustment request, and adjusts, based on the resource adjustment parameter, the virtual network interface card allocated to the host; or adjusts the control plane function that needs to be undertaken by the processor core.

According to the foregoing method, the system management module (or the system management module and the chassis management module) can adjust the network resource of the host based on a granularity of the virtual network interface card and the processor core, to ensure that the adjusted network resource can better meet a requirement of the user.

According to a second aspect, an embodiment of this application further provides a resource configuration apparatus. The resource configuration apparatus has a function of implementing behaviors in the method examples in the first aspect. For beneficial effects, refer to the descriptions of the first aspect. Details are not described herein again. The function may be implemented by hardware, or may be implemented by executing corresponding software by hardware. The hardware or software includes one or more modules corresponding to the foregoing functions. In a possible design, a structure of the apparatus includes a system management module, and optionally, further includes a chassis management module. Deployment positions of the two modules of the resource configuration apparatus are not limited in this embodiment of this application. The system management module and the chassis management module may be deployed in a same computing device, or may be deployed in different computing devices. For example, the system management module may be deployed on a switch in a computing system. The chassis management module may be deployed in a resource chassis including a network resource (for example, a management device in the resource chassis).

The system management module can complete initial resource configuration of a host. After completing initial resource configuration of the host, the system management module can further obtain host resource update information configured by a user, where the host resource update information indicates a network resource that needs to be allocated to the host. In a running process of the host, the system management module may adjust, based on the host resource update information, a network resource allocated to the host, where the network resource allocated to the host is used to perform data transmission with the host or carry a data processing task that needs to be executed by the host.

In a possible implementation, the system management module may provide a part or all of the following information:
occupation of the network resource in the computing system and the network resource configured for the host. The part or all of the information is used for presentation to the user.

In a possible implementation, the system management module may obtain shared information configured by the user, where the shared information indicates whether the network resource in the computing system supports sharing. The chassis management module is configured to obtain the shared information from the system management module, and configure a shared resource for the network resource of the host based on the shared information, where the shared resource is a network resource, in the computing system, that is not configured for the host and that supports sharing, and the shared resource is used to share a data transmission task or a data processing task of the network resource of the host.

In a possible implementation, the computing system establishes a connection based on a CXL bus, and the shared resource and the network resource of the host implement exchange of the data transmission task or the data processing task via a shared memory on the CXL bus.

In a possible implementation, the network resource includes a plurality of intelligent network interface cards, and the intelligent network interface card includes a processor core and a virtual network interface card. When completing the initial resource configuration of the host, the system management module may allocate the virtual network interface card on the intelligent network interface card to the host, where the virtual network interface card is configured to perform data transmission with the host. The system management module may further configure a control plane function that needs to be undertaken by the processor core, where the control plane function includes a part or all of the following: managing the virtual network interface card, carrying the data processing task that needs to be executed by the host, and scheduling, for the virtual network interface card, data that needs to be transmitted.

In a possible implementation, when the system management module completes the initial resource configuration of the host, the system management module sends a resource allocation request to the chassis management module based on the host resource information, where the resource allocation request carries a resource parameter, and the resource parameter indicates a network resource that needs to be allocated to the host. The chassis management module receives the resource allocation request, allocates the virtual network interface card on the intelligent network interface card to the host based on the resource parameter, and configures the control plane function that needs to be undertaken by the processor core.

In a possible implementation, when allocating the virtual network interface card on the intelligent network interface card to the host, the chassis management module may allocate a plurality of virtual network interface cards to the host, where the plurality of virtual network interface cards include two virtual network interface cards on different intelligent network interface cards.

In a possible implementation, when adjusting, based on the host resource update information, the network resource allocated to the host, the system management module may perform a part or all of the following actions:
Action 1: Adjust, based on the host resource update information, the virtual network interface cards allocated to the host.
Action 2: Adjust, based on the host resource update information, the control plane function that needs to be undertaken by the processor core.

In a possible implementation, when the system management module adjusts the network resource allocated to the host, the system management module is configured to send a resource adjustment request to the chassis management module based on the host resource update information, where the resource adjustment request carries a resource adjustment parameter, and the resource adjustment parameter indicates a network resource that needs to be adjusted for the host. The chassis management module receives the resource adjustment request, and adjusts, based on the resource adjustment parameter, the virtual network interface card allocated to the host; or adjusts the control plane function that needs to be undertaken by the processor core.

In a possible implementation, the computing system further includes a switch, the switch is configured to connect the host and the network resource, and the system management module is deployed in the switch.

In a possible implementation, the computing system further includes a resource chassis, and the network resource and the chassis management module are located in the resource chassis.

According to a third aspect, this application further provides a computing system. The computing system is a CDI-based computing system, the computing system includes a host, a switch, and a network resource chassis, the network resource chassis includes a network resource, and the switch includes the system management module mentioned in the first aspect and the possible implementations of the first aspect.

In a possible implementation, the network resource chassis includes a management device, and the management device includes the chassis management module mentioned in the first aspect and the possible implementations of the first aspect.

According to a fourth aspect, this application further provides a computing device. The computing device may be a hardware device in which the system management module or the chassis management module is located in the method examples in the first aspect and the possible implementations of the first aspect. The storage is configured to store computer program instructions. The processor has a function of implementing the system management module or the chassis management module in the method examples in the first aspect or any one of the possible implementations of the first aspect. For beneficial effects, refer to the descriptions of the first aspect. Details are not described herein again.

According to a fifth aspect, this application further provides a computer-readable storage medium. The computer-readable storage medium stores instructions. When the instructions are run on a computer, the computer is enabled to perform the method in the first aspect and the possible implementations of the first aspect.

According to a sixth aspect, this application further provides a computer program product including instructions. When the computer program product is run on a computer, the computer is enabled to perform the method in the first aspect and the possible implementations of the first aspect.

According to a seventh aspect, this application further provides a computer chip. The chip is connected to a storage, and the chip is configured to read and execute a software program stored in the storage, to perform the method in the first aspect and the possible implementations of the first aspect.

### BRIEF DESCRIPTION OF DRAWINGS

FIG. 1 is a diagram of an architecture of a computing system according to this application;
FIG. 2 is a diagram of a network interface card allocated to a host in a passthrough manner according to this application;
FIG. 3 is a diagram of an architecture of a computing system according to this application;
FIG. 4 is a diagram of a resource configuration method according to this application;
FIG. 5 is a diagram of a configuration interface of host resource information according to this application;
FIG. 6 is a diagram of a resource topology of a host according to this application;
FIG. 7 is a diagram of a configuration interface for information presentation according to this application;
FIG. 8 is a diagram of a system structure constructed based on NVMe-oF according to this application; and
FIG. 9 is a diagram of a structure of a computing device according to this application.

### DESCRIPTION OF EMBODIMENTS

Before a resource configuration method and apparatus, a system, and a device provided in embodiments of this application are described, some concepts in embodiments of this application are first described.

### (1). Virtualization technology, compute instance, container (container), and virtual machine (virtual machine, VM).

Virtualization (virtualization) is a resource management technology. Various physical resources of a host, such as a processor, an internal memory, and an interface, are abstracted and converted by using the virtualization technology before presentation. Virtualization is a resource configuration method based on logic, and is logical abstraction of physical resources.

The host can form, on the host by using the virtualization technology, a software module that has an independent running environment. In embodiments of this application, the software module that is formed on the host and that has the independent running environment is referred to as a compute instance. The compute instance may be a virtual machine, or may be a container.

The virtual machine is a "complete computer" that is obtained through simulation by using the virtualization technology, has complete hardware system functions, and runs in a completely isolated environment. Any work that can be completed in a physical computer can be implemented in the virtual machine. The virtual machine has a processor (the processor is also referred to as a virtual processor), a memory, a hard disk, and other components. The processor, the memory, the hard disk, and the other components of the virtual machine are all virtualized from a processor, a memory, a hard disk, and other components of the host.

The container is an independent running environment obtained through simulation by using the virtualization technology. The container is similar to a lightweight sandbox, and shields software and hardware outside the container. The container implements virtualization on an operating system plane and directly reuses the operating system on the host.

For the host, the compute instance is considered as a special "process". The "process" executes a compute task and further occupies the processor, the memory, the hard disk, and other resources of the host.

### (2) Device passthrough, passthrough device, and single-root passthrough (single-root I/O virtualization, SR-IOV)

Device passthrough means that a device is allocated to a compute instance or a host in a passthrough manner for use. To facilitate allocating the device to the compute instance or the host in a passthrough manner, some technologies for performing virtualization on a hardware plane are developed. Based on the virtualization technologies on the hardware plane, hardware can be virtualized into a plurality of "devices". These "devices" are identified as independent hardware devices by the host (such as a host operating system) or the compute instance (such as a virtual machine or a container). Both the host operating system and the compute instance use these virtual devices as real hardware.

For example, a physical network interface card may be virtualized into a plurality of virtual network interface cards by using the virtualization technologies on the hardware plane. Each virtual network interface card has a function of the physical network interface card, and can implement data exchange. The host and the compute instance may separately perform, by using different virtual network interface cards, data exchange with a device other than the host or another compute instance deployed on the host. In this way, the host and the compute instance do not contend for a "network interface card", avoiding resource preemption.

For another example, a physical hard disk may be virtualized into a plurality of virtual hard disks by using the virtualization technologies on the hardware plane. Each virtual hard disk has a function of the physical hard disk, and can implement data storage. The host and the compute instance can separately store their own data on different virtual hard disks.

A single-root passthrough (single-root I/O virtualization, SR-IOV) technology is a common virtualization technology on the hardware plane. The following describes the SR-IOV technology.

An SR-IOV standard allows efficient sharing of a peripheral component interconnect express (peripheral component interconnect express, PCIe) device between compute instances.

The SR-IOV technology includes two parts during implementation: a physical function (physical function, PF) and a virtual function (virtual function, VF).

The PF is used to support a peripheral component interconnect (peripheral component interconnect, PCI) function of an SR-IOV function. The PF includes an SR-IOV function structure, and is used to manage the SR-IOV function. The PF is a full-featured PCIe function and can be discovered, managed, and processed like any other PCIe device. The PF has a full-configuration resource and can be used to configure or control the PCIe device.

The VF is a function associated with the PF. The VF is a lightweight PCIe function that can share one or more physical resources on a physical network interface card with the PF and other VFs associated with the same PF. The VF is allowed to have configuration resources used only for its own actions. It may be considered that the VF is obtained by extending the PF, and the PF may be extended to obtain a plurality of VFs.

Different VFs and PFs may be oriented to the host operating system or the compute instance, to be used by the host operating system and the compute instance. In other words, the host operating system and the compute instance may separately operate different VFs and PFs, so that resource contention can be effectively avoided.

The VF is used as an example. After the VF is created, the host operating system may use the VF as real "hardware", and can communicate with some compute instances on the host or a device other than the host by using the VF.

In the foregoing descriptions, the VF and the PF may be understood as virtualized devices (namely, virtual network interface cards), and these virtualized devices can be allocated to the compute instance or the host (namely, the host operating system) in a passthrough manner for use.

In some scenarios, a hardware device (for example, a hard disk) with a physical form can also be allocated to the compute instance or the host (namely, the host operating system) in a passthrough manner for use. For example, in embodiments of this application, a hard disk in a storage resource chassis or a processor in a computing resource may be allocated to the host in a passthrough manner for use.

In embodiments of this application, a system management module may interact with a chassis management module, for allocating a resource to the host, and allocating the resource to the host in a passthrough manner. The resource herein may be a virtualized device, such as a virtual network interface card or a virtual processor, or may be a hardware device, such as a processor. Actually, the resource that is allocated to the host in a passthrough manner is the resource allocated to the host and belongs to the host. For example, after the virtual network interface card is allocated to the host in a passthrough manner, the virtual network interface card is a virtual network interface card that belongs to the host, and may be considered as a component of the host (in terms of a physical address, the component is remotely deployed at the resource chassis).

### (3) Compute express link (compute express link, CXL)

A CXL is developed based on a peripheral component interconnect express (peripheral component interconnect express, PCIe) standard. The CXL is run on a PCIe physical layer and has a same electrical feature as the PCIe. In comparison with the PCIe, a buffer and a memory are optimized in the CXL, and the CXL can support lower latency and a higher bandwidth.

In a CXL 3.0, a concept of memory sharing is introduced. Memory sharing allows a plurality of devices connected based on the CXL to access a specified memory area. The part of memory area is referred to as a shared memory. Memory sharing can further ensure that the plurality of devices connected based on the CXL can view latest data in the shared memory, to ensure data consistency.

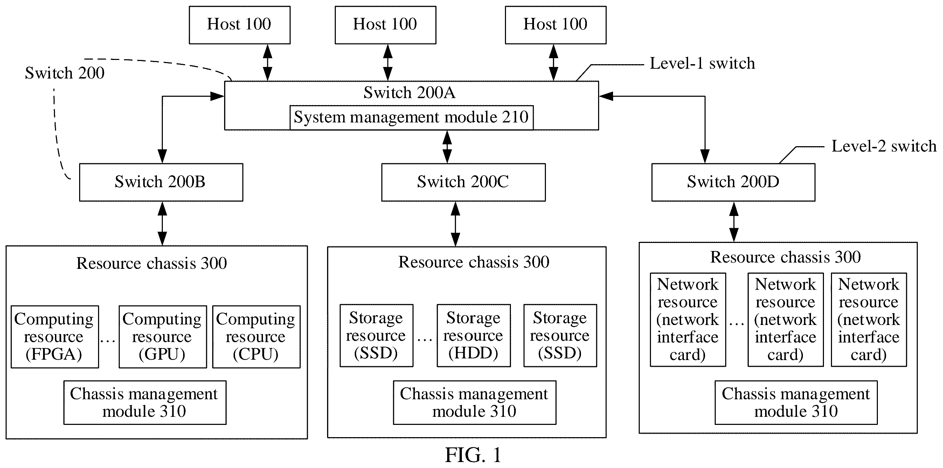

FIG. 1 shows a computing system according to an embodiment of this application. The computing system includes hosts 100, switches 200, and resource chassis 300. In embodiments of this application, quantities of hosts 100 and resource chassis 300 that are included in the computing system are not limited. The computing system may include one or more hosts 100. The computing system may include one or more resource chassis 300. FIG. 1 shows only an example of three hosts 100 and three resource chassis 300.

In the computing system, the switch 200 is connected to the host 100 and the resource chassis 300 by using a bus. The bus may be a PCIe-based line, or may be a CXL, a unified bus (unified bus, Ubus or UB), or a bus of a cache coherent interconnect for accelerators (cache coherent interconnect for accelerators, CCIX) protocol or another protocol.

A data exchange channel between the host 100 and the resource chassis 300 is established by using the switch 200, and the host 100 may interact with the resource chassis 300 by using the switch 200. This is a manner of a connection between the switch 200, the host 100, and the resource chassis 300 in embodiments of this application. Any connection manner in which the host 100 can establish the data exchange channel with the resource chassis 300 by using the switch 200 is applicable to embodiments of this application.

The computing system may be a computing system constructed based on a CDI. FIG. 1 shows an example of a computing system formed in a "two-layer cascading" connection manner. It can be seen from FIG. 1 that, there are "two layers of" switches 200 between the host 100 and the resource chassis 300. A level-1 switch is a switch 200A. The switch 200A is connected to the hosts 100, and establishes connections to level-2 switches, to be specific, a switch 200B, a switch 200C, and a switch 200D. For any level-2 switch, the level-2 switch may be connected to one or more resource chassis 300. FIG. 1 shows only an example of a case in which each level-2 switch is connected to one resource chassis 300.

The computing system shown in FIG. 1 is merely a computing system with a simple connection manner. During actual application, the host 100, the resource chassis 300, and the switch 200 may be flexibly connected by using a bus based on deployment positions and quantities of the host 100 and the resource chassis 300, and a quantity of switches 200.

The following describes each component in the computing system.

### (1) Host 100

The host 100 is a main data processing device in the computing system, and is a device that undertakes a service in the computing system. The host 100 may be a computing device such as a desktop computer, a server, a notebook computer, and a mobile device. The host 100 may be a bare metal server. A compute instance of a container or a virtual machine may also be deployed on the host 100. The "host 100" in a physical form in the CDI includes only basic hardware such as a mainboard and a memory. In the CDI, other hardware of the host 100 is allowed to be geographically extended to one or more resource chassis 300. In embodiments of this application, a system management module 210 deployed on the switch 200 can allocate, in a passthrough manner, a resource in the resource chassis 300 to the "host 100" in the physical form by using a software technology. In this way, the "host 100" in the physical form and the resource that is allocated to the host 100 in a passthrough manner are presented as a "computing device" with a strong processing capability in terms of functions.

### (2) Resource chassis 300

The resource chassis 300 may be understood as a resource set, and can provide a resource externally. In embodiments of this application, the resource chassis 300 can provide the resource for the host 100. The resource may be a computing resource, and the computing resource can help the host 100 process some data processing tasks. The computing resource may be a processor (which may also be referred to as a physical processor, namely, a processor in a hardware form), or a virtual processor (the virtual processor refers to a processing unit formed after the processor is virtualized by using a virtualization technology). Alternatively, the resource may be a network resource, and the network resource can help the host 100 perform data transmission. The network resource may be a network interface card (which may also be referred to as a physical network interface card, namely, a network interface card in a hardware form), or a virtual network interface card (the virtual network interface card refers to a unit formed after the network interface card is virtualized by using the virtualization technology). Alternatively, the resource may be a storage resource. The storage resource can be used to store data that needs to be stored by the host 100. For example, the storage resource can help the host 100 persistently store data. The storage resource may be a storage (which may also be referred to as a physical storage, namely, a network storage in a hardware form), for example, a persistent storage or a memory such as a hard disk. The storage resource may alternatively be a virtual hard disk obtained by performing hardware virtualization.

The processor may be a central processing unit (central processing unit, CPU), an application-specific integrated circuit (application-specific integrated circuit, ASIC), a field programmable gate array (field programmable gate array, FPGA), an artificial intelligence (artificial intelligence, AI) chip, a system-on-chip (system-on-chip, SoC), a complex programmable logic device (complex programmable logic device, CPLD), or a graphics processing unit (graphics processing unit, GPU).

The storage may be a persistent storage such as a hard disk drive (hard disk drive, HDD) or a solid-state drive (solid-state disk, SSD), or may be a memory class storage such as a storage class memory (storage class memory, SCM).

The network interface card may be an intelligent network interface card, that is, the network interface card not only has a function of a conventional network interface card, that is, can perform data transmission, but also has a data processing capability. For example, the intelligent network interface card has a basic function of the network interface card, and can complete processing on a data packet based on a network protocol, for example, implement data encapsulation and transmission. In other words, the intelligent network interface card can perform input/output (input/output, I/O) request transmission with the host 100. The intelligent network interface card can be further configured to support data security, and can encrypt and decrypt data. The intelligent network interface card can be further used as a storage entry, to implement distributed data storage and remote data access by using the intelligent network interface card. For example, the intelligent network interface card may access some local storages (for example, a persistent storage such as a hard disk) of the host 100 or some storages in the resource chassis 300. In addition, the intelligent network interface card may be further used as an acceleration apparatus. For example, the intelligent network interface card can undertake some processing functions of a processor in the host 100. In other words, the host 100 may hand over some data processing tasks to the intelligent network interface card for execution. For another example, the intelligent network interface card can undertake some processing functions of the processor in the resource chassis 300. In other words, some data processing tasks that need to be executed by the processor in the resource chassis 300 may be executed by the intelligent network interface card.

Generally, in the computing system, resources of a same type may be centralized in the same resource chassis 300. For example, computing resources are centralized in one resource chassis 300. For ease of description, such a resource chassis 300 may be referred to as a computing resource chassis. In terms of a hardware structure, the computing resource chassis includes one or more processors. For another example, network resources are centralized in one resource chassis 300. For ease of description, such a resource chassis 300 may be referred to as a network resource chassis. In terms of a hardware structure, the network resource chassis includes one or more network interface cards. For another example, storage resources are centralized in one resource chassis 300. For ease of description, such a resource chassis 300 may be referred to as a storage resource chassis. In terms of a hardware structure, the storage resource chassis includes one or more storages.

In addition, in the computing resource chassis, in addition to the computing resource, the computing resource chassis may further include some storage resources, for example, a storage resource such as a memory. The storage resources can cooperate with the computing resource to execute a data processing task, and temporarily cache data needed by the computing resource to execute the data processing task or data generated after the data processing task is executed.

In addition to the resource, the resource chassis 300 further includes a chassis management module 310. The chassis management module 310 is configured to manage the resource in the resource chassis 300 in which the chassis management module 310 is located. The chassis management module 310 can allocate the resource in the resource chassis 300 to the host 100 or a compute instance on the host 100 in a passthrough manner. The chassis management module 310 can further monitor the resource in the resource chassis 300, and determine a status of the resource in the resource chassis 300. For example, for the computing resource such as the processor, the chassis management module 310 can determine a status such as whether the processor is busy and load of the processor. For another example, for the storage resource such as the storage, the chassis management module 310 can monitor occupation of storage space of the storage. For another example, for the storage resource such as the network interface card, the chassis management module 310 can monitor an operating status of the network interface card.

A specific form of the chassis management module 310 is not limited in embodiments of this application. The chassis management module 310 may be hardware such as the processor, or may be a software module running on the processor.

When the chassis management module 310 is a software module, the resource chassis 300 may include a management device. The management device includes the processor and a small amount of memory. For a type of the processor, refer to the foregoing content. Details are not described herein again. For a type of the memory, refer to the foregoing descriptions about the storage. Details are not described herein again. The chassis management module 310 may be run on the management device (the processor of the management device), and the resource in the resource chassis 300 may be connected to the management device. The management module has a function of the chassis management module 310 mentioned in embodiments of this application, to manage the resource in the resource chassis 300. In the following descriptions, the chassis management module 310 is merely used as an execution body of the management resource for description. A manner in which the management device manages the resource in the resource chassis 300 is similar to a manner in which the chassis management module 310 manages the resource. Details are not described in embodiments of this application.

In embodiments of this application, the resource chassis 300 in the computing system includes at least one resource chassis 300, and the at least one resource chassis 300 is a network resource chassis. The network resource chassis includes the chassis management module 310 and one or more network interface cards.

The chassis management module 310 manages the network interface card mainly in the following aspects:

### 1. Management of the virtual network interface card

It can be learned from the foregoing descriptions about SR-IOV that, the network interface card can form the virtual network interface card based on the SR-IOV, namely, a VF and a PF. By interacting with a system management module 210 in the computing system, the chassis management module 310 configures the host 100 or the compute instance on the host 100 to which the VF and the PF can be allocated in a passthrough manner for the VF and the PF. Alternatively, by interacting with the system management module 210 in the computing system, the chassis management module 310 may allocate the virtual network interface card to the host 100 or the compute instance on the host 100 in a passthrough manner.

The virtual network interface card may be responsible for data exchange between the host 100 to which the virtual network interface card is allocated in a passthrough manner and a device other than the host 100. For example, the virtual network interface card can transmit the I/O request initiated by the host 100 to which the virtual network interface card is allocated in a passthrough manner to another host 100. For another example, the virtual network interface card can receive the I/O request transmitted by the device prior to the host 100, and transmit the I/O request to the host 100. The virtual network interface card may also be responsible for data exchange between the compute instance to which the virtual network interface card is allocated in a passthrough manner and another compute instance or another device (the another device may be the host 100 in the computing system, or may be a device outside the computing system) other than the compute instance. For example, the virtual network interface card can transmit, to the another device or the another compute instance, an I/O request initiated by the compute instance to which the virtual network interface card is allocated in a passthrough manner. For another example, the virtual network interface card receives the I/O request sent by the another device or the another compute instance, and transmits the I/O request to the host 100.

The virtual network interface card is used to transmit the I/O request, and undertakes a function of the network interface card on a data plane.

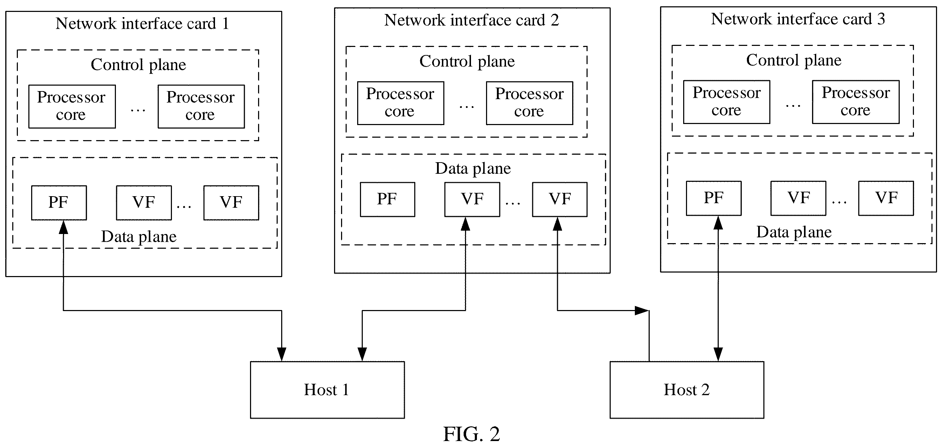

FIG. 2 shows a network resource chassis according to an embodiment of this application. The network resource chassis includes a chassis management module 310 (although not shown in FIG. 2) and a plurality of network interface cards. Each network interface card includes a plurality of virtual network interface cards, such as the VF and the PF, on the data plane, and includes a plurality of processor cores on a control plane.

The virtual network interface card may be allocated to the host 100 in the computing system in a passthrough manner. As shown in FIG. 2, the PF on a network interface card 1 and the VF on a network interface card 2 are allocated to a host 1001 in a passthrough manner, and the PF on a network interface card 3 and the VF on the network interface card 2 are allocated to a host 1002 in a passthrough manner.

### Second, management of a processor core (core) on the network interface card

The processor core (core) is a hardware module deployed in the network interface card, and is a main data processing module in the processor. When a CPU is deployed in the network interface card, the processor core is a core of the CPU. The processor core mainly undertakes a control plane function. The processor core (core) is a general-processing core on the network interface card. The processor core may be an advanced reduced instruction set computing machine (advanced RISC machine, ARM), or may be a microprocessor without interlocked pipeline stages (microprocessor without interlocked pipeline stages, MIPS).

The control plane provides the following functions:

### 1. Be responsible for I/O scheduling of the virtual network interface card on the data plane

The I/O request sent by the host 100 or the compute instance first allocates the control plane in a passthrough manner and reaches the processor core. The processor core determines a virtual network interface card that needs to process the I/O request. After determining the virtual network interface card, the processor core delivers the I/O request to the virtual network interface card, and adds the I/O request to a transmission queue of the virtual network interface card. The transmission queue is a queue in which the I/O request that is placed and that needs to be transmitted by the virtual network interface card.

For example, for the virtual network interface card that has been allocated to the host 100 in a passthrough manner, after the host 100 initiates the I/O request, the I/O request reaches the network resource chassis through the switch 200. In the network resource chassis, a chassis managing device sends the I/O request to the network interface card to which the virtual network interface card belongs. In the network interface card, the processor core on the control plane determines, by parsing information related to the host 100 in the I/O request, the virtual network interface card that is allocated to the host 100 in a passthrough manner, and sends the I/O request to the virtual network interface card, to add the I/O request to the transmission queue of the virtual network interface card.

### 2. Be responsible for management of the virtual network interface card

The processor core on the control plane may determine an operating status of the virtual network interface card, for example, determine whether the virtual network interface card operates normally, and determine a quantity of I/O requests that are not processed by the virtual network interface card. When the chassis management module 310 of the network resource chassis indicates that the virtual network interface card needs to be allocated to the host 100 in a passthrough manner, the processor core on the control plane interacts with the chassis management module 310 to determine the virtual network interface card that needs to be allocated to the host 100 in a passthrough manner, and allocates the virtual network interface card to the host 100 in a passthrough manner.

### 3. Be responsible for offloading of a processing function

When being used as the acceleration apparatus, the network interface card may carry some data processing tasks offloaded by the processor or the storage. In the network interface card, the data processing tasks may be executed by the processor core on the control plane.

In embodiments of this application, the processor in the host 100 may hand over some data processing tasks to the network interface card for execution. In the computing system, the host 100 may send the data processing task to the network interface card by using the switch 200 and the chassis management module 310 of the network resource chassis. The processor (such as a GPU or an FPGA) in the computing resource chassis may also hand over some data processing tasks to the network interface card for execution. The storage (such as an SSD) in the storage resource chassis may also hand over some data processing tasks to the network interface card for execution. For example, the storage in the storage resource chassis undertakes some data processing tasks for stored data. When the storage cannot execute these data processing tasks in a timely manner, the storage may send the data processing tasks to the network interface card by using the switch 200 and the chassis management module 310 of the network resource chassis. In the network interface card, the data processing tasks may be executed by the processor core on the control plane.

### 4. Be responsible for management of a virtual device other than the virtual network interface card.

The computing system may include a plurality of resource chassis 300. In addition to the network resource chassis, the computing system may further include the computing resource chassis or the storage resource chassis.

The computing resource chassis is used as an example. The chassis management module 310 is also deployed in the computing resource chassis, and the chassis management module 310 can manage the computing resource in the computing resource chassis. A management task of the chassis management module 310 for some computing resources may be allocated to the processor core in the network interface card.

For the computing resource chassis, the processor in the computing resource chassis may be virtualized into a virtual processor, the virtual processor may be allocated to the host 100 in a passthrough manner, and the virtual processor may undertake a service of the host 100. The chassis management module 310 of the computing resource chassis can manage the virtual processor, and can determine which virtual processors are allocated to the host 100 in a passthrough manner.

When the chassis management module 310 of the computing resource chassis is in a busy state, some tasks that the virtual processor is allocated to the host 100 in a passthrough manner may be offloaded to the processor core, and the processor core assists the chassis management module 310 of the computing resource chassis in implementing allocating the virtual processor to the host 100 in a passthrough manner.

In the foregoing descriptions, only an example in which the chassis management module 310 of the computing resource chassis offloads the task that the virtual processor is allocated to the host 100 in a passthrough manner is used for description. A type of the task offloaded by the chassis management module 310 of the computing resource chassis to the processor core is not limited in embodiments of this application.

Similarly, for the storage resource chassis, the chassis management module 310 of the storage resource chassis may hand over some data read operations of a virtual storage to the processor core for execution.

It should be noted that, the foregoing listed control plane functions are merely examples, and the control plane function that can be implemented by the processor core is not limited in embodiments of this application.

When the chassis management module 310 of the network resource chassis manages the processor core on the network interface card, the network resource chassis may allocate the control plane function that needs to be undertaken to the processor core. For example, the network resource chassis may configure some processor cores to control I/O scheduling of the virtual network interface card on the data plane. The network resource chassis configures some processor cores to manage the virtual network interface card, and configures some processor cores to undertake and execute a processing function offloaded to the network interface card.

In embodiments of this application, computing power of the network interface card in the network resource chassis may be shared. In other words, computing power of a network interface card A can be used to support a network interface card B, and the network interface card B may support, by using the network interface card A, a function needed by the network interface card B. That is, the network interface card A shares the computing power thereof with the network interface card B.

For a network interface card, whether the network interface card supports sharing may be determined by the system management module 210 in the computing system or the chassis management module 310 of the network resource chassis based on an actual requirement. The chassis management module 310 of the network resource chassis or the system management module 210 in the computing system may determine, based on a status of the network interface card, whether the network interface card supports sharing. For example, when the network interface card is not allocated to any host 100 in a passthrough manner, the chassis management module 310 of the network resource chassis or the system management module 210 in the computing system may consider that the network interface card supports sharing. Whether the network interface card supports sharing may also be configured by a user. For example, the user may configure, by using a system management client deployed on the user side, shared information indicating whether the network interface card supports sharing. The system management client may transmit the shared information to the system management module 210 in the computing system, and then the system management module 210 notifies the chassis management module 310 of the network resource chassis of the shared information.

Computing power sharing of the network interface card is manifested in computing power sharing on the data plane and computing power sharing on the control plane.

### 1. Computing power sharing on the data plane.

Computing power sharing on the data plane refers to computing power sharing between virtual network interface cards. An example in which the virtual network interface card is allocated to the host 100 in a passthrough manner is used. After a virtual network interface card is allocated to the host 100 in a passthrough manner, when performing data transmission with the host 100, the virtual network interface card may perform data transmission with the host 100 by using computing power of another one or more virtual network interface cards. In other words, when a quantity of data transmission tasks of the host 100 that need to be executed by the virtual network interface card allocated to the host 100 in a passthrough manner is increased or cannot be completed, another virtual network interface card in the network resource chassis may help the virtual network interface card execute some data transmission tasks of the host 100. For ease of description, the another virtual network interface card may be referred to as a shared virtual network interface card. Generally, a virtual network interface card that can be used as the shared virtual network interface card is a virtual network interface card that is not allocated to any host 100 in a passthrough manner. A bandwidth that can be implemented by the virtual network interface card is configured by using a quality of service (quality of service, QoS).

When the virtual network interface card that is allocated to the host 100 in a passthrough manner is the PF, it means that all resources of the network interface card to which the PF belongs are allocated to the host 100 on the data plane, and the network interface card is exclusively occupied by the host 100. The shared virtual network interface card that can be used as the PF may be the PF or the VF on another network interface card in the network resource chassis.

When the virtual network interface card that is allocated to the host 100 in a passthrough manner is the VF, it means that some resources of the network interface card to which the VF belongs are allocated to the host 100 on the data plane, and the network interface card is not exclusively occupied by the host 100. The shared virtual network interface card that can be used as the VF may be the PF or the VF on another network interface card in the network resource chassis, or may be another VF on the network interface card to which the VF belongs.

When the virtual network interface card is allocated to the compute instance in a passthrough manner, a computing power sharing manner on the data plane is similar to a computing power sharing manner on the data plane when the virtual network interface card is allocated to the host 100 in a passthrough manner. Details are not described herein again.

### 2. Computing power sharing on the control plane.

Computing power sharing on the control plane refers to computing power sharing between processor cores. When a corresponding control plane function is configured for a processor core, if the processor core cannot undertake the configured control plane function, the processor core may undertake the configured control plane function by using computing power of another one or more processor cores. In other words, when the processor core cannot undertake the configured control plane function, and cannot complete corresponding related control plane operations in a timely manner or cannot complete corresponding related control plane operations, another processor core in the network resource chassis may help the processor core perform some of the related control plane operations. For ease of description, the another processor core may be referred to as a shared processor core. Generally, a processor core that can be used as the shared processor core is an idle processor core. The shared processor core may be an idle processor core on a network interface card on which the processor core is located, or may be an idle processor core on a network interface card other than the network interface card on which the processor core is located.

In embodiments of this application, on the data plane, the chassis management module 310 of the network resource chassis can configure a shared virtual network interface card for the virtual network interface card. The chassis management module 310 of the network resource chassis may notify the virtual network interface card of information (such as an address and an identifier) about the shared virtual network interface card. When the virtual network interface card needs the shared virtual network interface card to undertake a data transmission task of the host 100, the virtual network interface card sends an I/O request that needs to be processed by the shared virtual network interface card to the shared network interface card, and requests the shared virtual network interface card to process the I/O request. The shared virtual network interface card processes the I/O request based on the request of the virtual network interface card.

On the control plane, the chassis management module 310 of the network resource chassis can configure the shared processor core for the processor core. The chassis management module 310 of the network resource chassis may notify the processor core of information (such as an address and an identifier) about the shared processor core. When the processor core needs the shared processor core to undertake the control plane function, the processor core notifies the shared processor core of a related control plane operation that needs to be performed by the shared processor core, and requests the shared processor core to process the related control plane operation. The shared processor core performs the related control plane operation based on the request of the processor core.

### (3) Switch 200.

The switch 200 is connected to the host 100 and the resource chassis 300, and is a device that completes data exchange between the host 100 and the resource chassis 300 in the computing system.

Due to existence of the switch 200, a connection relationship between the host 100 and the resource chassis 300 is in a tree-like "hierarchical structure". To facilitate distinguishing between different switches 200, the switches 200 may be distinguished based on layers. For example, a switch 200 closest to the host 100 and connected to all the resource chassis 300 in the computing system is referred to as a level-1 switch. A switch connected to the level-1 switch 200 may be referred to as a level-2 switch, and a switch 200 connected to the level-2 switch is referred to as a level-3 switch 200.

As shown in FIG. 1, the system management module 210 may be deployed on the level-1 switch (namely, a switch 200B). The system management module 210 may be a software module running on the level-1 switch, or may be a hardware module on the level-1 switch. Herein, only an example in which the system management module 210 is deployed on the level-l switch 200 is used for description. A deployment position of the system management module 210 in the computing system is not limited in embodiments of this application. For example, the system management module 210 may be deployed on any switch 200 directly connected to the host 100, or may be deployed on a management device that is specially configured in the computing system and that is independent of the host 100, the resource chassis 300, and the switch 200. The management device keeps being connected to the host 100, the resource chassis 300, and the switch 200.

The system management module 210 is configured to manage the entire computing system. The system management module 210 may monitor performance of the resource in the resource chassis 300 and a resource occupation status, and the system management module 210 may learn of the performance of the resource in the resource chassis 300 and the resource occupation status by using the chassis management module 310 deployed in the resource chassis 300.

The resource monitored by the system management module 210 may be a hardware resource. For example, the system management module 210 may monitor occupation of storage space in each storage in the storage resource chassis. The system management module 210 may monitor performance, an operating status, and the like of each processor in the computing resource chassis. The system management module 210 may monitor performance, an operating status, and the like of each network interface card in the network resource chassis. The resource monitored by the system management module 210 may alternatively be a virtual resource. For example, the system management module 210 may monitor occupation of storage space in each virtual storage in the storage resource chassis. The system management module 210 may monitor performance, an operating status, and the like of each virtual processor in the computing resource chassis, and the system management module 210 may monitor performance, an operating status, and the like of each virtual network interface card in the network resource chassis.

The system management module 210 may further configure a resource for the host 100. For example, the system management module 210 may configure the resource for the host 100 based on resource information of the host 100 configured by a user. The system management module 210 may further dynamically adjust the resource configured for the host 100 after configuring the resource for the host 100. For example, after configuring the resource for the host 100, the system management module 210 may further adjust, based on host 100 resource update information configured by the user, the resource configured for the host 100.

In actual application, a system management client is deployed on the user side, and the system management client may be deployed on a computing device close to the user. The user configures the resource information of the host 100 for the host 100 in the computing system by using the operating system management client. For example, the user may configure, by using the operating system management client, the resource needed by the host 100. The management client may notify the system management module 210 of the resource information of the host 100 configured by the user.

The system management module 210 may further send, to the system management client, the monitored resource occupation status or the resource of the host 100 that is obtained after resource configuration of the host 100 is completed, and the system management client may present, to the user, the resource occupation status or the resource allocated to the host 100.

In addition, the user may further configure, by using the system management client, shared information indicating whether the network interface card supports sharing. The system management client may transfer the shared information to the system management module 210, so that the system management module 210 notifies the chassis management module 310 of the network resource chassis of the shared information.

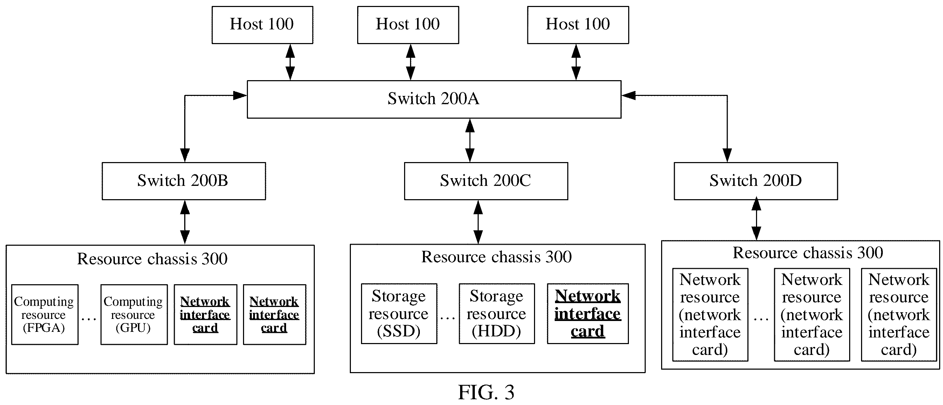

In the foregoing descriptions, when the resource chassis 300 is described, management of the network interface card in the network resource chassis and computing power sharing of the network interface card are described. In actual application, the computing resource chassis and the storage resource chassis may also include the network interface card, and the network interface card may be an intelligent network interface card. As shown in FIG. 3, a slot of the network interface card may be added in the computing resource chassis or the storage resource chassis, and the network interface card is allowed to be inserted into the computing resource chassis or the storage resource chassis.

Management of the network interface card and a computing power sharing manner of the network interface card in the computing resource chassis and the storage resource chassis are similar to management of the network interface card and a computing power sharing manner of the network interface card in the network resource chassis. For details, refer to the foregoing descriptions, and details are not described herein again.

Generally, the network interface card inserted into the computing resource chassis or the storage resource chassis may be used as an acceleration apparatus, to undertake an offloaded processing function of a computing resource in the computing resource chassis, or undertake an offloaded processing function of a storage resource in the storage resource chassis. The network interface card may be further responsible for management of a virtual device (for example, management of the virtual processor or the virtual storage) in the computing resource chassis or the storage resource chassis. That is, the network interface card can specifically implement the third control plane function and the fourth control plane function mentioned above. Because the network interface card is deployed inside the computing resource chassis or the storage resource chassis, and is closer to the computing resource and the storage resource, exchange between the network interface card and the computing resource and the storage resource is faster, and the offloaded processing function of the computing resource and the offloaded processing function of the storage resource can be implemented more efficiently. Certainly, the network interface card in the computing resource chassis or the storage resource chassis may also be used as a supplement to a network resource in the network resource chassis, and can be allocated to the host 100 in a passthrough manner to be used as a network interface card of the host 100, to perform data transmission with the host 100. That is, the network interface card in the computing resource chassis or the storage resource chassis has a data plane function.

It should be noted that, in embodiments of this application, module division is an example, and is merely a logical function division. In actual implementation, another division manner may be used. Functional modules in embodiments of this application may be integrated into one processing module, or each of the modules may exist alone physically, or two or more modules are integrated into one module. The integrated module may be implemented in a form of hardware, or may be implemented in a form of a software functional module.

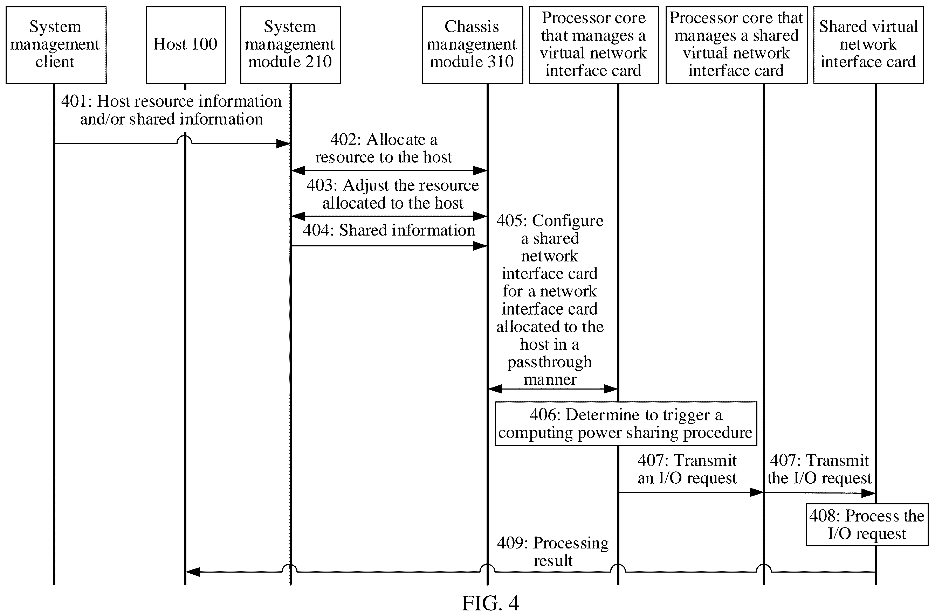

The following describes a resource configuration method provided in embodiments of this application with reference to FIG. 4. The following mainly uses an example in which a resource is allocated to a host 100 in a passthrough manner for description. A resource configuration method used when a resource is allocated to a compute instance in a passthrough manner is similar to a resource configuration manner used when the resource is allocated to the host 100 in a passthrough manner. Details are not described herein again.

The embodiment shown in FIG. 4 mainly describes configuration of a network resource. The resource configuration method shown in FIG. 4 includes an initial resource configuration procedure of the resource of the host 100. For details, refer to step 401 and step 402. The method further includes a dynamic adjustment process of the resource of the host 100 (which may also be referred to as reallocation of the resource of the host 100). For details, refer to step 403. The method further includes a computing power sharing procedure of a network interface card. For details, refer to step 404 to step 409.

Step 401: A system management client transmits resource information of the host 100 and/or shared information configured by a user to a system management module 210. The shared information indicates whether a network interface card in a network resource chassis supports sharing.

The system management client deployed on a user side provides a resource configuration interface of the host 100 and a network interface card sharing configuration interface. The user can configure the resource information of the host 100 for the host 100 through the resource configuration interface of the host 100, and configure, by using the network interface card sharing configuration interface, the shared information indicating that the network interface card supports sharing.

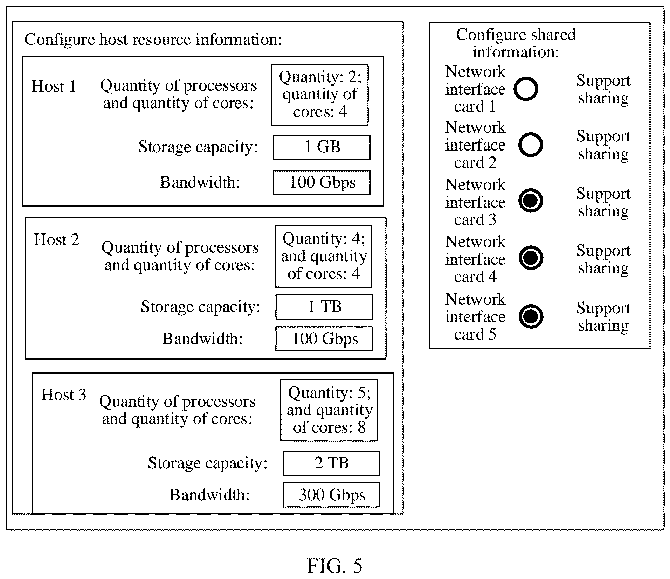

FIG. 5 is a diagram of a user-oriented interface of a resource configuration interface of a host 100 and a network interface card sharing configuration interface in a system management client according to an embodiment of this application.

In the interface shown in FIG. 5, the user can learn of hosts 100 included in a computing system, and may configure a resource for each host 100.

The resource configuration interface of the host 100 allows the user to accurately configure the resource for the host 100 from a perspective of hardware when configuring the resource for the host 100. For a computing resource, the user may configure, for the host 100, a quantity of processors that need to be included in the host 100, a type of the processor, and a quantity of cores included in the processor. For a storage resource, for example, a persistent storage such as a hard disk, the user may configure, for the host 100, a quantity of hard disks needed by the host 100, a capacity of the hard disk, a type of the hard disk (for example, a solid-state drive or a mechanical hard disk), or the like. For a network resource, the user may configure, for the host 100, a quantity of network interface cards needed by the host 100, a bandwidth of the network interface card, and a type of the network interface card (for example, a conventional network interface card or an intelligent network interface card). In this configuration manner, the user can accurately understand hardware composition of the host 100. For the computing system, the system management module 210 needs only the hardware composition configured by the user to complete resource configuration of the host 100, and a manner of configuring the resource for the host 100 by the system management module 210 is more convenient. In this case, the hardware composition configured by the user is the resource information of the host 100 configured by the user.

It should be noted that, because the network interface card can be used as an acceleration apparatus, when the user may configure, for the host 100, the quantity of network interface cards needed by the host 100 and the type of the network interface card (for example, the conventional network interface card or the intelligent network interface card), the user may further configure a quantity of network interface cards used as acceleration apparatuses or a quantity of network interface cards used as conventional network interface cards.

The resource configuration interface of the host 100 also allows the user to configure the resource of the host 100 from a perspective of overall performance of the host 100 when configuring the resource for the host 100. For a computing resource, the user may configure, for the host 100, a data processing capability needed by the host 100, for example, a performance parameter of a processor of the host 100. A specific type of the performance parameter is not limited in this application, and any parameter that can represent performance of the processor may be used as the performance parameter. For a storage resource, for example, a persistent storage such as a hard disk, the user may configure, for the host 100, a storage capacity needed by the host 100. For a network resource, the user may configure a bandwidth needed by the host 100 for the host 100. In this configuration manner, the user only needs to learn of an overall performance requirement of the host 100, for completing resource configuration of the host 100. This manner is simple, and is also applicable to a green hand user who does not have deep understandings of components of the host 100. For the computing system, the system management module 210 needs to configure the resource for the host 100 only from the perspective of the overall performance of the host 100 configured by the user. Specifically, a quantity of hardware selection manners that are selected by the host 100 is greater, and a degree of flexibility is higher. In this case, the overall performance parameter configured by the user is the resource information of the host 100 configured by the user.

FIG. 5 shows an example in which the user configures the resource information of the host 100 from the perspective of the overall performance of the host 100. In FIG. 5, the user separately configures the resource information of the host 100 such as a quantity of processors, a quantity of cores of the processor, a storage capacity, and a bandwidth of the host 100 for a host 1001, a host 1002, and a host 1003.

The foregoing manner in which the user configures the resource information of the host 100 is merely an example. Content included in the resource information of the host 100 configured by the user is not limited in embodiments of this application. Any information that can indicate the resource needed by the host 100 is applicable in embodiments of this application.

The network interface card sharing configuration interface allows the user to configure whether one or more network interface cards in the network resource chassis support sharing, that is, configure the shared information. The user can control utilization of the network resource in the computing system by configuring the shared information.

As shown in FIG. 5, the user may configure that some network interface cards (for example, a network interface card 1 and a network interface card 2) do not support sharing, and some network interface cards (for example, a network interface card 3, a network interface card 4, and a network interface card 5) support sharing.

The system management client allows the user to simultaneously complete configuration of the resource information of the host 100 and the shared information, and also allows the user to sequentially complete configuration of the resource information of the host 100 and the shared information. A configuration sequence of resource information of the host 100 and the shared information is not limited in embodiments of this application.

After the system management client detects a configuration operation of the user, if the user configures only the resource information of the host 100, the system management client may send a configuration of the resource information of the host 100 to the system management module 210. If the user configures only the shared information, the system management client may send a configuration of the shared information to the system management module 210. If the user configures the resource information of the host 100 and the shared information, the system management client may send the configuration of the resource information of the host 100 and the shared information to the system management module 210.

If the system management module 210 receives the resource information of the host 100, the system management module 210 may perform step 402. If the system management module 210 receives the shared information, the system management module 210 may perform step 404. If the system management module 210 receives the resource information of the host 100 and the shared information, the system management module 210 may perform step 402 and step 404. A sequence of performing step 402 and step 404 by the system management module 210 is not limited in embodiments of this application.

Step 402: The system management module 210 allocates the resource to the host 100 based on the resource information of the host 100.

If the resource information of the host 100 is configured by the user for the host 100 from the perspective of hardware, the resource information of the host 100 describes hardware that the host 100 needs to include. The system management module 210 may select, for the host 100 from a resource chassis 300, a resource that meets a requirement of the resource information of the host 100, and allocate the resource to the host 100 in a passthrough manner. For example, the system management module 210 allocates a processor or a virtual processor in a computing resource chassis to the host 100 in a passthrough manner through interaction with a chassis management module 310 of the computing resource chassis. The system management module 210 allocates a storage or a virtual memory in a storage resource chassis to the host 100 in a passthrough manner through interaction with a chassis management module 310 of the storage resource chassis. The system management module 210 allocates a network interface card or a virtual network interface card in the network resource chassis to the host 100 in a passthrough manner through interaction with a chassis management module 310 of the network resource chassis.

When configuring the network interface card for the host 100, the user also configures the quantity of network interface cards used as acceleration apparatuses. In this case, the system management module 210 selects, from the network resource chassis, the network interface card used as an acceleration apparatus, and allocates the network interface card to the host 100 in a passthrough manner. The host 100 identifies the network interface card as an acceleration apparatus. The system management module 210 selects, from the network resource chassis, a network interface card used as a conventional network interface card, and allocates the network interface card to the host 100 in a passthrough manner. The host 100 identifies the network interface card as a conventional network interface card.

If the resource information of the host 100 is configured by the user for the host 100 from the perspective of the overall performance, the resource information of the host 100 describes the performance requirement (for example, the performance parameter of the processor, the bandwidth, and the storage capacity) of the host 100. The system management module 210 may select, from the resource chassis 300 based on the resource information of the host 100, a resource that meets a performance requirement of the host 100, and allocate the resource to the host 100 in a passthrough manner. For example, the system management module 210 allocates, to the host 100 in a passthrough manner through interaction with a chassis management module 310 of a computing resource chassis, a processor or a virtual processor that can meet a requirement of the performance parameter of the processor and that is in the computing resource chassis. The system management module 210 allocates, to the host 100 in a passthrough manner through interaction with a chassis management module 310 of a storage resource chassis, a storage or a virtual storage that can reach the storage capacity and that is in the storage resource chassis. The system management module 210 allocates, to the host 100 in a passthrough manner through interaction with a chassis management module 310 of the network resource chassis, a network interface card or a virtual network interface card that can ensure a bandwidth requirement and that is in the network resource chassis.

To ensure that the processor of the host 100 can meet the requirement of the performance parameter, the system management module 210 may further select, from the network resource chassis, a network interface card used as an acceleration apparatus, and allocate the network interface card to the host 100 in a passthrough manner. The host 100 identifies the network interface card as an acceleration apparatus. The network interface card used as an acceleration apparatus can undertake some processing functions of the processor of the host 100.

Through interaction between the system management module 210 and a chassis management module 310 of the resource chassis 300, the host 100 can maintain, by using a switch 200 in the computing system, a connection to the resource that is in the resource chassis 300 and that is allocated to the host 100 in a passthrough manner. Routing information from the host 100 to the resource that is allocated to the host 100 in a passthrough manner is also loaded into the switch 200, to ensure that data sent by the host 100 can flow into, by using the switch 200, the resource that is allocated to the host 100 in a passthrough manner, and data sent by the resource that is allocated to the host 100 in a passthrough manner can also flow into the host 100 by using the switch 200.

The following describes a process in which the system management module 210 allocates the resource to the host 100 through interaction with the chassis management module 310 in the resource chassis 300.

For any resource chassis 300, the system management module 210 sends a resource allocation request to the chassis management module 310 of the resource chassis 300 based on the resource information of the host 100. The resource allocation request is used to request to allocate the resource to the host 100, and the resource allocation request further carries a resource parameter. For the network resource, the resource parameter may be the bandwidth, or the resource parameter may include parameters such as the quantity of network interface cards and the type of the network interface card. For the storage resource, the resource parameter may be the storage capacity, or the resource parameter may include parameters such as the quantity of hard disks, the type of the hard disk, and the capacity of each hard disk. For the computing resource, the resource parameter may be the performance parameter of the processor, or the resource parameter may include parameters such as the quantity of processors, the type of the processor, and the quantity of cores of the processor.

After receiving the resource allocation request, the chassis management module 310 of the resource chassis 300 may select a resource from managed resources based on the resource parameter carried in the resource allocation request.

For the network resource, if the resource parameter is the bandwidth, the chassis management module 310 of the network resource chassis selects, from managed network interface cards, a network interface card that can support the bandwidth. The network interface card selected by the chassis management module 310 of the network resource chassis may be a physical network interface card, or may be a virtual network interface card. A quantity of network interface cards selected by the chassis management module 310 of the network resource chassis is not limited in embodiments of this application. There may be one or more network interface cards. The chassis management module 310 of the network resource chassis only needs to ensure that the selected one or more network interface cards can support the bandwidth. If the resource parameter includes the quantity of network interface cards, the type of the network interface card, and the like, the chassis management module 310 of the network resource chassis selects, from managed network interface cards, a network interface card that meets requirements of the quantity and the type. Similarly, the network interface card selected by the chassis management module 310 of the network resource chassis may be a physical network interface card, or may be a virtual network interface card.

In addition, when configuring the resource information of the host 100, the user further configures the quantity of network interface cards used as acceleration apparatuses. When the system management module 210 sends the resource allocation request to the chassis management module 310 of the network resource chassis based on the resource information of the host 100, the resource allocation request also carries the quantity of network interface cards used as acceleration apparatuses. After receiving the resource allocation request, the chassis management module 310 allocates, to the host 100 based on quantity information carried in the resource allocation request, the network interface card used as an acceleration apparatus.

Allocating the network interface card used as an acceleration apparatus to the host 100 is essentially that the chassis management module 310 allocates a specific quantity of processor cores from processor cores included in the network interface card to offload the processing function of the host 100. The quantity of processor cores may be determined by the chassis management module 310 based on a quantity of acceleration apparatuses that is carried in the resource allocation request, and the quantity of processor cores may be different from the quantity of network interface cards used as acceleration apparatuses. For example, when the quantity of network interface cards used as acceleration apparatuses that is configured by the user is two, the chassis management module 310 selects two groups of processor cores from processor cores included in the network interface cards to offload the processing function of the host 100. Each group of processor cores includes two processor cores. Each group of processor cores can be represented as a network interface card used as an acceleration apparatus.

If the user does not configure, when configuring the resource information of the host 100, the quantity of network interface cards used as acceleration apparatuses, the system management module 210 may analyze, when sending the resource allocation request to the chassis management module 310 of the network resource chassis based on the resource information of the host 100, related information (for example, the performance parameter of the processor, the quantity of processors, or the quantity of cores of the processor) of the computing resource in the resource information of the host 100 to determine the quantity of network interface cards used as acceleration apparatuses and that are allocated to the host 100, and include the quantity in the resource allocation request. The chassis management module 310 allocates, to the host 100 based on the quantity information carried in the resource allocation request, the network interface card used as an acceleration apparatus.

In embodiments of this application, in addition to allocating the specific quantity of processor cores to offload the processing function of the host 100, the chassis management module 310 of the network resource chassis can further allocate, based on a quantity of VPs or PFs that are allocated to the host 100 in a passthrough manner, a specific quantity of processor cores to manage the VP or the PF, and a specific quantity of processor cores to implement I/O scheduling of a virtual network interface card on a data plane. The chassis management module 310 of the network resource chassis may further allocate, based on a request of a chassis management module 310 of another resource chassis 300, a specific quantity of processor cores to manage a virtual device in the another resource chassis 300.

For the storage resource, if the resource parameter is the storage capacity, the chassis management module 310 of the storage resource chassis selects, from managed storages, a storage that can support the storage capacity. The storage selected by the chassis management module 310 of the storage resource chassis may be a physical storage, or may be a virtual storage. A quantity of storages selected by the chassis management module 310 of the storage resource chassis is also not limited in embodiments of this application. There may be one or more storages. The chassis management module 310 of the storage resource chassis only needs to ensure that the selected one or more selected storages support the storage capacity. If the resource parameter includes parameters such as the quantity of hard disks, the type of the hard disk, and the capacity of each hard disk, the chassis management module 310 of the storage resource chassis selects, from managed storages, a storage that meets requirements of the quantity, the type, and the capacity. Similarly, the storage selected by the chassis management module 310 of the storage resource chassis may be a physical storage, or may be a virtual storage.

For the computing resource, if the resource parameter is the performance parameter of the processor, the chassis management module 310 of the computing resource chassis selects, from managed processors, a processor that can support the performance parameter. The processor selected by the chassis management module 310 of the computing resource chassis may be a physical processor, or may be a virtual processor. A quantity of processors selected by the chassis management module 310 of the computing resource chassis is also not limited in embodiments of this application. There may be one or more processors. The chassis management module 310 of the computing resource chassis only needs to ensure that the selected one or more selected processors support the performance parameter. If the resource parameter includes parameters such as the quantity of processors, the type of the processor, and the quantity of cores of the processor, the chassis management module 310 of the computing resource chassis selects, from managed processors, a processor that meets requirements of the quantity, the type, and the quantity of cores. Similarly, the processor selected by the chassis management module 310 of the computing resource chassis may be a physical processor, or may be a virtual processor.

After selecting the resource from the managed resources based on the resource parameter carried in the received resource allocation request, the chassis management module 310 of each resource chassis 300 may allocate the resource to the host 100 in a passthrough manner, so that the host 100 can identify the resource.

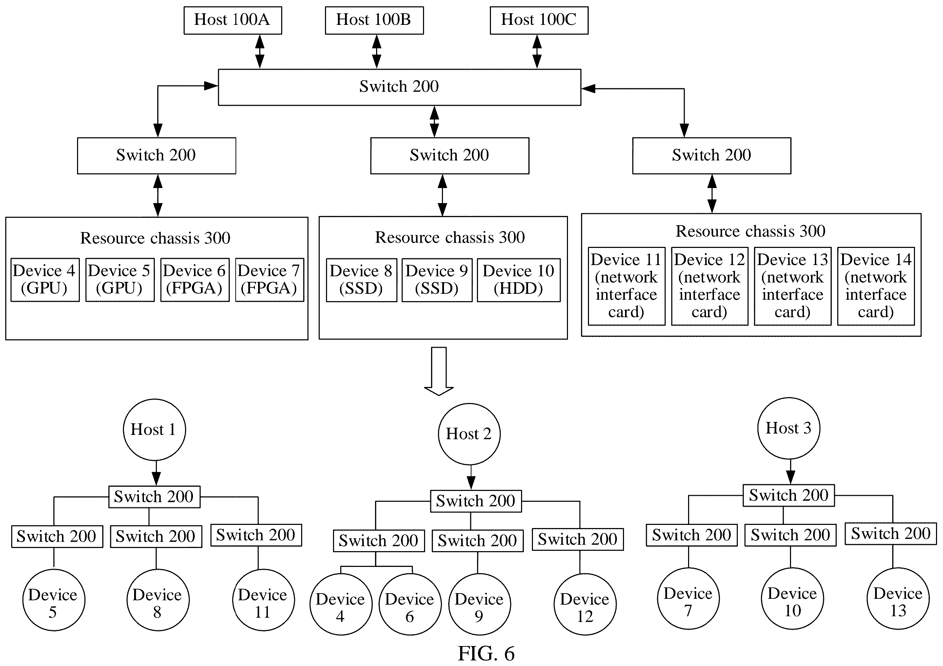

FIG. 6 shows a topology structure of the host 100 and the resource in the resource chassis 300 after the system management module 210 configures the resource for the host 100. It can be seen from FIG. 6 that, a host 100A maintains connections to a device 5, a device 8, and a device 11 by using four switches 200. A host 100B maintains connections to a device 4, a device 6, a device 9, and a device 12 by using four switches 200. A host 100C maintains connections to a device 7, a device 10, and a device 13 by using four switches 200. The device 11 to the device 14 may be physical network interface cards, or may be virtual network interface cards.

After step 401 and step 402 are performed, initial resource configuration of the host 100 is completed, the host 100 has the computing resource, the storage resource, and the network resource, and the host 100 can carry a service.

Step 403: In a running process of the host 100, the system management module 210 adjusts the resource allocated to the host 100. When performing step 403, the system management module 210 does not need to shut down the host 100, and the host 100 is still running and can normally run the service.

In embodiments of this application, after the initial resource configuration of the host 100 is completed, the resource allocated to the host 100 may be adjusted. That is, the resource allocated to the host 100 is no longer fixed. Two manners in which the system management module 210 performs step 403 are provided in embodiments of this application.

Manner 1: When triggered by the user, the system management module 210 adjusts the resource allocated to the host 100.

The user may configure, by using the system management client, resource information of the host 100 for the host 100 again based on a requirement of the host 100. For a manner of configuring the resource information of the host 100, refer to related descriptions in step 402. Details are not described herein again. For ease of description, after the initial resource configuration of the host 100 is completed, the resource information of the host 100 configured by the user is referred to as resource update information of the host 100.

After obtaining the resource update information of the host 100, the system management module 210 may adjust the resource to the host 100 based on the resource update information of the host 100.

When the resource update information of the host 100 is configured by the user from the perspective of hardware, the system management module 210 may add a resource or reduce a resource from the host 100 based on hardware that is described in the resource update information of the host 100 and that is needed by the host 100. For example, a quantity of processors described in the resource update information of the host 100 is less than the quantity of processors currently included in the host 100. The system management module 210 may reduce the quantity of processors in the host 100. For example, the system management module 210 may reduce, through interaction with the chassis management module 310 of the computing resource chassis, the quantity of processors that are allocated to the host 100 in a passthrough manner. For another example, a quantity of network interface cards used as the acceleration apparatuses that is described in the resource update information of the host 100 is less than the quantity of network interface cards that are currently included in the host 100 and that are used as the acceleration apparatuses. The system management module 210 may reduce the quantity of network interface cards in the host 100. For example, the system management module 210 may reduce, through interaction with the chassis management module 310 of the network resource chassis, the quantity of network interface cards that are allocated to the host 100 in a passthrough manner.

When the resource update information of the host 100 is configured by the user from the perspective of the overall performance of the host 100, the system management module 210 may add a resource to the host 100 or reduce a resource from the host 100 based on a performance requirement (such as a performance parameter of the processor, a bandwidth, or a storage capacity) of the host 100 that is described in the resource update information of the host 100. For example, if the bandwidth supported by the network interface card currently included in the host 100 is less than the bandwidth described in the resource update information of the host 100, the system management module 210 may increase the quantity of network interface cards in the host 100.

The following describes a process in which the system management module 210 adjusts, through interaction with the chassis management module 310 of the resource chassis 300, the resource allocated to the host 100.

For any resource chassis 300, the system management resource sends a resource update request to the chassis management module 310 of the resource chassis 300 based on the resource update information of the host 100 and the resource that currently has been allocated to the host 100. The resource update request is used to request to adjust the resource allocated to the host 100. The resource update request further carries a resource adjustment parameter. For the network resource, the resource adjustment parameter may be a bandwidth that needs to be increased or a bandwidth that needs to be decreased, or the resource adjustment parameter may include parameters such as a quantity of network interface cards that needs to be increased or decreased and a type of the network interface card. For the storage resource, the resource adjustment parameter may be a storage capacity that needs to be increased or decreased, or the resource adjustment parameter may include parameters such as a quantity of hard disks that needs to be increased or decreased, a type of the hard disk, and a capacity of each hard disk. For the computing resource, the resource adjustment parameter may be an adjusted performance parameter of the processor, or the resource adjustment parameter may include parameters such as a quantity of processors that needs to be increased or decreased, a type of the processor, and a quantity of cores of the processor.

After receiving the resource update request, the chassis management module 310 of the resource chassis 300 may adjust, based on the resource adjustment parameter carried in the resource update request, the resource allocated to the host 100. That the chassis management module 310 of the resource chassis 300 adjusts the resource allocated to the host 100 may be increasing the resource allocated to the host 100, or may be reducing the resource allocated to the host 100.

For different types of resources, a manner in which the system management module 210 adjusts, through interaction with the chassis management module 310 of the resource chassis 300, the resource allocated to the host 100 is similar to a manner in which the system management module 210 allocates the resource to the host 100 through interaction with the chassis management module 310 of the resource chassis 300. A difference lies in that when adjusting, through interaction with the chassis management module 310 of the resource chassis 300, the resource allocated to the host 100, the system management module 210 focuses on resource adjustment (for example, a process of adjusting a quantity of resources from large to small or from small to large). When allocating the resource to the host 100 through interaction with the chassis management module 310 of the resource chassis 300, the system management module 210 focuses on resource allocation (a process in which the resource changes from none to existence). For details, refer to the foregoing descriptions, and details are not described herein again.

In embodiments of this application, the system management module 210 may send, to the system management client, a resource occupation status obtained through monitoring or the resource allocated to each host 100, and the system management client may present, to the user, the resource occupation status or the resource that has been allocated to the host 100.

The system management client deployed on the user side provides a resource monitoring interface of the host 100 for the user. The system management client presents the resource occupation status or the resource allocated to the host 100 to the user through the resource monitoring interface of the host 100. The user may view the resource occupation status or the resource that has been allocated to the host 100 through the resource configuration interface of the host 100. The resource occupation status may describe a status of an occupied resource in each resource chassis 300.

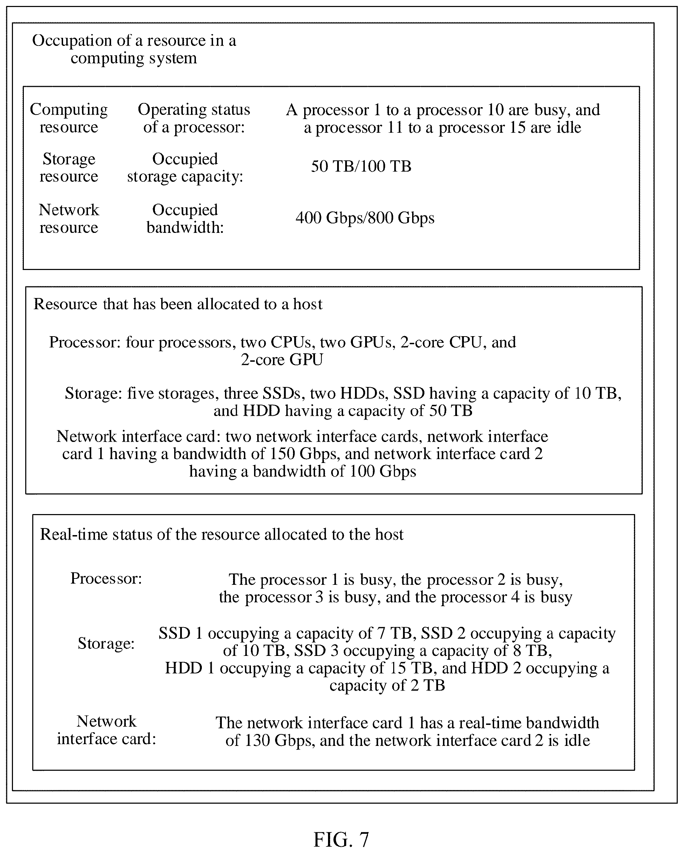

FIG. 7 is a diagram of a user-oriented interface of a resource monitoring interface of a host 100 in a system management client according to an embodiment of this application.

In the interface shown in FIG. 7, the user can learn of a resource occupation status in the computing system or the resource that has been allocated to the host 100. The resource occupation status presented to the user may be occupation statuses of various resources. For example, for the storage resource such as the storage, the resource occupation status may describe occupation of storage space in each storage, or occupation of an overall storage capacity in the computing system. For another example, for the computing resource such as the processor, the resource occupation status may describe an operating status of each processor. For another example, for the network resource such as the network interface card, the resource occupation status may be used to describe an operating status of each network interface card, and an occupied bandwidth of each network interface card, or an overall occupied bandwidth of all network interface cards in the computing system. The storage herein may be a physical storage, or may be a virtual storage. The network interface card may be a physical network interface card, or may be a virtual network interface card. The processor herein may be a physical processor, or may be a virtual processor.

The resource that has been allocated to the host 100 and that is presented to the user may be the resource that has been allocated to the host 100 and that is accurately described from the perspective of hardware. Optionally, the system management client deployed on the user side may further present, to the user through the resource monitoring interface of the host 100, a real-time status of the resource that has been allocated to the host 100.

For example, for the computing resource, the quantity of processors allocated to the host 100, the type of the processor, and the quantity of cores included in the processor may be presented to the user. In addition, the operating status (for example, busy or idle) of the processor allocated to the host 100 may be further presented to the user. For another example, for the storage resource, the quantity of hard disks allocated to the host 100, the capacity of the hard disk, and the type of the hard disk may be presented to the user. In addition, the occupation status of the storage space of the storage allocated to the host 100 (for example, an idle capacity or an occupied capacity of the storage) may be further presented to the user. For another example, for the network interface card resource, the quantity of network interface cards allocated to the host 100, the bandwidth of the network interface card, and the type of the network interface card may be presented to the user. In addition, the operating status of the network interface card allocated to the host 100 (for example, the network interface card is idle or busy, and a real-time bandwidth of the network interface card) may be further presented to the user.

In FIG. 7, the system management client deployed on the user side presents the resource occupation status to the user through the resource monitoring interface of the host 100. The resource occupation status includes the occupation status of the overall storage capacity in the computing system, overall utilization of all the processors in the computing system, and the overall occupied bandwidths of all the network interface cards in the computing system.

The system management client deployed on the user side presents, to the user through the resource monitoring interface of the host 100, the resource that has been allocated to the host 100, including:
the quantity of processors allocated to the host 100, the type of the processor, and the quantity of cores included in the processor;
the quantity of hard disks allocated to the host 100, the capacity of the hard disk, and the type of the hard disk; and
the quantity of network interface cards allocated to the host 100 and the bandwidth of the network interface card.

The system management client deployed on the user side presents, to the user through the resource monitoring interface of the host 100, the real-time status of the resource that has been allocated to the host 100, including:
the operating status (for example, busy or idle) of the processor allocated to the host 100;
the occupation status of the storage space of the storage allocated to the host 100 (for example, the capacity or the occupied capacity of the storage); and
the operating status of the network interface card allocated to the host 100 (for example, the network interface card is idle or busy, and the real-time bandwidth of the network interface card).

The user views, by using the system management client, the resource occupation status in the computing system and resource information that is after resource configuration of the host 100 is completed. When browsing the information, the user may also reconfigure the resource information of the host 100 for the host 100 based on the current resource occupation status and the current resource of the host 100.

Manner 2: The system management module 210 autonomously adjusts the resource allocated to the host 100.

Requirements for a data processing speed of the host 100 and data transmission latency of the host 100 vary with a service carried on the host 100. For example, for a livestreaming service, it is required that the data transmission latency of the host 100 be low when the host 100 carries the livestreaming service. For another example, for a video coding service, it is required that the host 100 can efficiently process video data when carrying the video coding service. That is, the host 100 needs to have a high data processing speed.

The data processing speed of the host 100 and the data transmission latency of the host 100 vary with a service-related task executed by the host 100. The livestreaming service is used as an example. When the host 100 needs to process more tasks, the data transmission latency of the host 100 is increased, and for a single task, the data processing speed of the host 100 is also affected. In this case, if a quantity of network interface cards configured for the host 100 can be properly increased, the current data transmission latency of the host 100 can be reduced. If a quantity of processors is increased for the host 100 or a quantity of network interface cards used as acceleration apparatuses is increased for the host 100, for a single task, the data processing speed of the host 100 is increased.

The system management module 210 may monitor an operating parameter when the host 100 undertakes a service, for example, the data transmission latency of the host 100, a service type of the host 100 (that is, whether the service of the host 100 is a latency-sensitive service), or a change trend of processor utilization of the host 100. The system management module 210 analyzes the operating parameter, determine the resource that needs to be added to the host 100 or the resource that needs to be reduced from the host 100, and adjust the resource for the host 100.

Regardless of the foregoing manner, the system management module 210 can adjust the resource of the host 100. Deployment of the system management module 210 ensures resource scalability of the host 100, and can further improve resource utilization in the computing system.

The following describes the computing power sharing procedure of the network interface card in the computing system.

Step 404: The system management module 210 transmits the shared information to the chassis management module 310 of the network resource chassis.

After receiving the shared information, the system management module 210 may transmit the shared information to the chassis management module 310 of the network resource chassis by using the switch 200.

In some scenarios, the user may not configure the shared information, and the system management module 210 determines by it self whether the network interface card in the network resource chassis supports sharing, that is, the system management module 210 generates the shared information by itself. The system management module 210 transmits the shared information to the chassis management module 310 of the network resource chassis.

Certainly, when the user does not configure the shared information, the chassis management module 310 of the network resource chassis may alternatively generate the shared information based on a current operating status of each network interface card. For example, the chassis management module 310 of the network resource chassis may consider that a network interface card that is not allocated to the host 100 in a passthrough manner or the compute instance supports sharing. In this case, there is no need to perform step 404.

Step 405: The chassis management module 310 of the network resource chassis configures, based on the shared information, a shared network interface card for the network interface card that is in the network resource chassis and that is allocated to the host 100 in a passthrough manner, where the shared network interface card may be a shared virtual network interface card on the data plane, or may be a shared processor core on the control plane.

After receiving the shared information, the chassis management module 310 of the network resource chassis can determine a network interface card supporting sharing in the network resource chassis. The chassis management module 310 of the network resource chassis may determine whether the network interface card supporting sharing is allocated to the host 100 in a passthrough manner. That is, whether the network interface card supporting sharing is allocated to the host 100.

If there is a network interface card that is not allocated to the host 100 in a passthrough manner and that supports sharing, the chassis management module 310 of the network resource chassis may configure the shared network interface card for the network interface card that is allocated to the host 100 in a passthrough manner.

On the data plane, the chassis management module 310 of the network resource chassis may configure the shared virtual network interface card for the virtual network interface card that is allocated to the host 100 in a passthrough manner. After the shared virtual network interface card is configured, the chassis management module 310 of the network resource chassis may send information about the shared virtual network interface card to a processor core that manages the virtual network interface card. The information about the shared virtual network interface card may be information such as an identifier and a number that are of the shared virtual network interface card and that can be identified by the virtual network interface card.

On the control plane, for a processor core to which a control plane function has been allocated, for example, the processor core being configured to be responsible for processing function offloading or virtual network interface card management, the chassis management module 310 of the network resource chassis may configure a shared processor core for the processor core. The chassis management module 310 of the network resource chassis may send information about the shared processor core to the processor core. The information about the shared processor core may be information such as an identifier and a number that are of the shared processor core and that can be identified by the processor core.

It should be noted that, in a process in which the system management module 210 completes resource allocation of the host 100 (herein, "resource allocation of the host 100" may be initial resource allocation of the host 100, or may be resource reallocation of the host 100 when the resource of the host 100 is adjusted) through interaction with the chassis management module 310 of the network resource chassis, if the chassis management module 310 of the network resource chassis has learned of the shared information, the chassis management module 310 of the network resource chassis may preferentially allocate a network interface card that does not support sharing to the host 100 in a passthrough manner.

The following uses a computing power sharing process of the network interface card on the data plane as an example for description.

Step 406: The processor core that manages the virtual network interface card determines to trigger the computing power sharing procedure.

There are many manners for the processor core to perform step 406. For example, the processor core may monitor data transmission latency when the processor core performs data transmission. If the data transmission latency is greater than a threshold, the processor core determines to trigger the computing power sharing procedure. For another example, the processor core monitors a quantity of to-be-transmitted I/O requests in a transmission queue, and when the quantity of to-be-transmitted I/O requests is greater than a specified value, the processor core determines to trigger the computing power sharing procedure.

Step 407: The processor core that manages the virtual network interface card transmits an I/O request to a processor core that manages the shared virtual network interface card, and then the processor core that manages the shared virtual network interface card transmits the I/O request to the shared virtual network interface card.

The processor core that manages the virtual network interface card may select some I/O requests from the transmission queue of the virtual network interface card, and send the I/O requests to the processor core that manages the shared virtual network interface card.

In some scenarios, in the transmission queue of the processor core that manages the virtual network interface card, some I/O requests are latency-sensitive I/O requests, and remaining I/O requests are not latency-sensitive I/O requests. Such latency-sensitive I/O requests require low data transmission latency. The processor core that manages the virtual network interface card may transmit the latency-sensitive I/O requests to the processor core that manages the shared virtual network interface card.

A manner in which the processor core that manages the virtual network interface card determines the latency-sensitive I/O request is not limited in embodiments of this application. For example, the I/O request may carry a latency-sensitive identifier, and the processor core that manages the virtual network interface card may determine, by parsing the identifier in the I/O request, that the I/O request is the latency-sensitive I/O request. For another example, the I/O request may carry a service identifier. The service identifier indicates a service to which data carried in the I/O request belongs. The processor core that manages the virtual network interface card may determine, by parsing the service identifier, whether the service is a latency-sensitive service (for example, the livestreaming service). When determining that the service is the latency-sensitive service, the I/O request is the latency-sensitive I/O request. For another example, the I/O request may carry an identifier of a host 100. The identifier of the host 100 indicates the host 100 that generates the I/O request. The processor core side that manages the virtual network interface card may store an identifier of a host 100 that undertakes the latency-sensitive service. If the processor core that manages the virtual network interface card may determine, by parsing the identifier of the host 100 carried in the I/O request, that the host 100 undertakes the latency-sensitive service, the I/O request is the latency-sensitive I/O request.

When sending the I/O request to the processor core that manages the shared virtual network interface card, the processor core that manages the virtual network interface card may send the I/O request via a shared memory. For example, the switch 200 in the computing system is connected to the host 100 and the resource chassis by using a CXL bus. In the computing system formed based on the CXL bus, the shared memory is disposed, and all devices in the computing system can access the shared memory. The processor core that manages the virtual network interface card may store the I/O request in the shared memory. The processor core that manages the virtual network interface card sends a computing power sharing request to the processor core that manages the shared virtual network interface card. The computing power sharing request is used to request the shared virtual network interface card to process the I/O request. The computing power sharing request carries a storage address of the I/O request in the shared memory, and may further carry the information about the shared virtual network interface card. After receiving the computing power sharing request, the processor core that manages the shared virtual network interface card may obtain the I/O request from the shared memory based on the storage address, and add the obtained I/O request to a transmission queue of the shared virtual network interface card.

The processor core that manages the virtual network interface card and the processor core that manages the shared virtual network interface card may learn of in advance information such as deployment positions about a VF and a PF on each physical network interface card and an identifier of the shared virtual network interface card. To be specific, after learning of the identifier of the shared virtual network interface card, the processor core that manages the virtual network interface card can determine a physical network interface card on which the shared virtual network interface card is located and a virtual network interface card identified by the identifier of the shared virtual network interface card.

If the virtual network interface card and the shared virtual network interface card of the virtual network interface card are located on a same physical network interface card, and the processor core that manages the virtual network interface card and the processor core that manages the shared virtual network interface card are not the same processor core, the processor core that manages the virtual network interface card may directly send the computing power sharing request to the processor core that manages the shared virtual network interface card. If the virtual network interface card and the shared virtual network interface card of the virtual network interface card are located on a same physical network interface card, and the processor core that manages the virtual network interface card and the processor core that manages the shared virtual network interface card are the same processor core, transfer of the I/O request is simpler. The processor core may directly migrate the I/O request that needs to be transmitted by the shared virtual network interface card from the transmission queue of the virtual network interface card to the transmission queue of the shared virtual network interface card. If the virtual network interface card and the shared virtual network interface card of the virtual network interface card are located on different physical network interface cards, the processor core that manages the virtual network interface card may send, by using the chassis management module 310, the computing power sharing request to the processor core that manages the shared virtual network interface card. The chassis management module 310 manages network resources, learns of the information about the VF and the PF on each physical network interface card, and therefore can implement forwarding of the computing power sharing request.

During actual application, especially in a scenario in which the virtual network interface card and the shared virtual network interface card of the virtual network interface card are located on different physical network interface cards, the processor core that manages the virtual network interface card and the processor core that manages the shared virtual network interface card may not learn of information about a VF and a PF that are on a physical network interface card other than the physical network interface cards on which the virtual network interface card and the shared virtual network interface card are located. After learning of the identifier of the shared virtual network interface card, the processor core that manages the virtual network interface card cannot determine the physical network interface card on which the shared network interface card is located and the virtual network interface card identified by the identifier of the shared virtual network interface card. However, the chassis management module 310 manages the network resources, and learns of the information about the VF and the PF on each physical network interface card. The processor core that manages the virtual network interface card may send the computing power sharing request to the chassis management module 310. After identifying the identifier that is of the virtual shared network interface card and that is carried in the computing power sharing request, the chassis management module 310 may send the computing power sharing request to the processor core that manages the shared virtual network interface card, so that the processor core that manages the shared virtual network interface card sends the computing power sharing request.

When sending the I/O request to the processor core that manages the shared virtual network interface card, the processor core that manages the virtual network interface card may also directly send the computing power sharing request carrying the I/O request, to request the shared virtual network interface card to process the I/O request.

In the foregoing descriptions, the chassis management module 310 of the network resource chassis actively configures the shared virtual network interface card for the virtual network interface card, and notify in advance the processor core that manages the virtual network interface card of the processor core that manages the shared virtual network interface card that is allocated to the processor core that manages the virtual network interface card. During actual application, the chassis management module 310 of the network resource chassis may configure the shared virtual network interface card for the virtual network interface card based on the request of the processor core that manages the virtual network interface card. In other words, when the processor core that manages the virtual network interface card determines to trigger the computing power sharing procedure, the processor core that manages the virtual network interface card may initiate a shared network interface card configuration request to the chassis management module 310 of the network resource chassis, to request the chassis management module 310 to configure the shared virtual network interface card for the virtual network interface card. After configuring the shared virtual network interface card for the virtual network interface card, the chassis management module 310 may feed back the information about the shared virtual network interface card to the processor core that manages the virtual network interface card, and after learning of the shared virtual network interface card, the processor core that manages the virtual network interface card performs step 407.

Step 408: The processor core that manages the shared virtual network interface card adds the I/O request to the transmission queue of the shared virtual network interface card, and the shared virtual network interface card may process the I/O request after receiving the I/O request.

For the shared virtual network interface card, processing of the I/O request is discarding or performing transmission. For example, when determining that a target address carried in the I/O request is invalid or missing, the shared virtual network interface card may select to discard the I/O request. For another example, when determining that a target address carried in the I/O request is valid, the shared virtual network interface card may perform transmission on the I/O request based on the target address.

Step 409: After processing the I/O request, the shared virtual network interface card may feed back a processing result of the I/O request to a processor of the host 100 to which the virtual network interface card is allocated in a passthrough manner. In some scenarios, the virtual shared network interface card may also feed back the processing result of the I/O request to the virtual network interface card, and the virtual network interface card feeds back the processing result of the I/O request to the processor of the host 100 to which the virtual network interface card is allocated in a passthrough manner. The processor of the host 100 herein may be a host 100 deployed in the host 100 in a physical form, or may be a computing resource allocated to the host 100 in a passthrough manner.

In addition, it should be noted that, in step 406 to step 409, only an example in which the processor core that manages the virtual network interface card cooperates with the processor core that manages the shared virtual network interface card to implement computing power sharing between the virtual network interface card and the shared virtual network interface card is used for description. The computing power sharing manner mentioned above is merely a possible implementation. A specific procedure of implementing computing power sharing between the virtual network interface card and the shared virtual network interface card is not limited in embodiments of this application. For example, a processor core responsible for I/O scheduling of the virtual network interface card cooperates with a processor core responsible for I/O scheduling of the shared virtual network interface card to implement computing power sharing between the virtual network interface card and the shared virtual network interface card. For another example, the chassis management module 310 directly implements computing power sharing between the virtual network interface card and the shared virtual network interface card.

On the control plane, manners in which the processor core performs related operations on the control plane by using computing power of the shared processor core are similar, and a difference lies in that the processor core transmits, to the shared processor core, data needed to perform related operations on the control plane. The shared processor core performs related operations on the control plane. For details, refer to the foregoing content. Details are not described herein again.

An actual scenario is used as an example. Computing power sharing of the network interface card is further described.

Scenario 1: A container is deployed on the host 100 in the computing system, and a resource in the resource chassis 300 may be allocated to the container in a passthrough manner.

The user can configure specifications of the container, such as a quantity of virtual processors, performance of the virtual processor, a quantity of virtual network interface cards, and a memory capacity in the container by using the system management client. The user can further configure the shared information to configure a network interface card that supports sharing. In addition, the user may further configure a related parameter of a transport layer protocol. The related parameter may determine whether the I/O request is the latency-sensitive I/O request. For example, in a transmission control protocol (transmission control protocol, TCP), the user configures a rest interface and whether the rest interface is of a latency-sensitive type; and in a user datagram protocol (user datagram protocol, UDP), the user configures a port (port) and whether the port is of a latency-sensitive type.

When a container A deployed in the computing system needs to transmit the I/O request to a container B deployed in the computing system, the container A may intercept the I/O request that needs to be transmitted to a virtual network interface card of the container A, and the virtual network interface card of the container A obtains the I/O request, and sends the I/O request to the container B.

When a device outside the computing system needs to access the container deployed in the computing system, an I/O request sent by the device outside the computing system first reaches a virtual network interface card of the container, and the virtual network interface card transmits the I/O request to the container.

The container A deployed in the computing system is used as an example. When the virtual network interface card of the container A detects that current network access traffic increases and there are many I/O requests that need to be transmitted, the virtual network interface card of the container A may cache the I/O requests into a CXL shared memory. The virtual network interface card of the container A obtains the shared virtual network interface card from the chassis management module 310, and sends a request to the shared virtual network interface card, to request to process the I/O requests in the CXL shared memory. The I/O request carries a storage address of the I/O request in the shared memory. The shared virtual network interface card obtains the I/O request from the shared memory, places the I/O request into a transmission queue of the shared virtual network interface card, processes the I/O request, and feeds back a processing result to the container A after processing the I/O request.

Scenario 2: Non-volatile memory express (Non-Volatile Memory Express, NVMe) storage network (NVMe-oF) In a system constructed based on the NVMe-oF, a direct connection channel between a storage controller and an SSD is established.

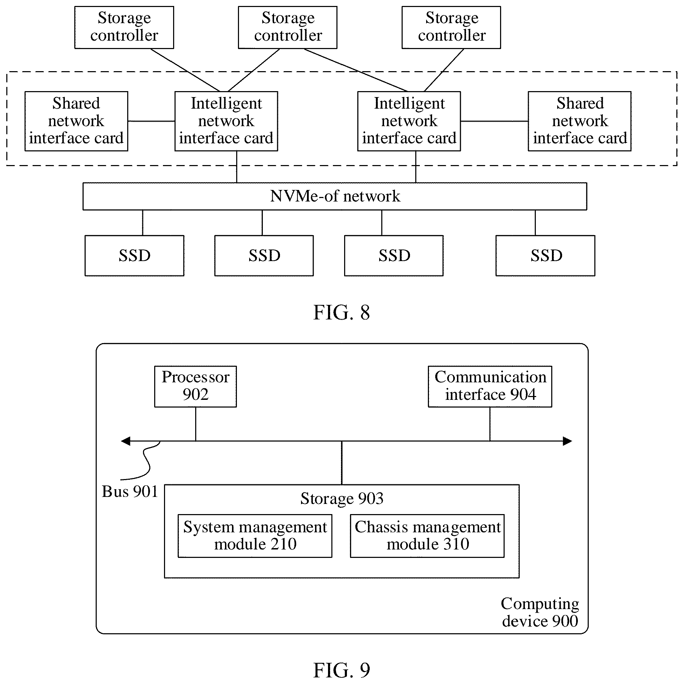

FIG. 8 is a diagram of a system constructed based on NVMe-oF. The storage controller exchanges a large amount of data with the SSD, to perform data reading and writing in the SSD. An intelligent network interface card may be deployed between the storage controller and the SSD. The intelligent network interface card may be used as an entry of the SSD, and the storage controller implements remote data access by using the intelligent network interface card.

On a data plane, a virtual network interface card on the intelligent network interface card can transmit an I/O request initiated by the storage controller to the SSD. On a control plane, a processor core of the intelligent network interface card can control I/O scheduling of the virtual network interface card on the data plane, and can further manage the virtual network interface card.

When the storage controller accesses a large amount of data in the SSD, a quantity of I/O requests is increased in a short period of time. For the virtual network interface card, a quantity of I/O requests that need to be transmitted is increased, and for the processor core, a quantity of I/O requests that need to be scheduled is also increased. Consequently, transmission latency of the I/O requests may be increased.

Therefore, when a system including the storage controller, the SSD, and the intelligent network interface card is constructed based on a CDI infrastructure, a user may configure a sharing function of enabling the intelligent network interface card, that is, configure a network interface card that supports computing power sharing. After receiving the configuration of the user, a system management module 210 configures a shared network interface card for an intelligent network interface card that is allocated to each storage controller in a passthrough manner.

As a data access peak arrives, the storage controller sends a large quantity of I/O requests. When the intelligent network interface card cannot process the I/O requests in a timely manner, the intelligent network interface card may transmit some I/O requests to the shared network interface card, and the shared network interface card processes the I/O requests.

This application further provides a computing device 900. As shown in FIG. 9, the computing device 900 includes a bus 901, a processor 902, a storage 903, and a communication interface 904. The processor 902, the storage 903, and the communication interface 904 communicate with each other via the bus 901. The computing device 900 may be a server or a terminal device. It should be understood that a quantity of processors and a quantity of storages in the computing device 900 are not limited in this application.

The bus 901 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is for representing the bus in FIG. 9, but this does not mean that there is only one bus or only one type of bus. The bus 901 may include a channel for transferring information between various components (for example, the storage 903, the processor 902, and the communication interface 904) of the computing device 900.

The processor 902 may include any one or more of processors such as a CPU, a GPU, a microprocessor (microprocessor, MP), or a digital signal processor (digital signal processor, DSP).

The storage 903 may include a volatile memory (volatile memory), for example, a random access memory (random access memory, RAM). The processor 902 may further include a non-volatile memory (non-volatile memory), for example, a read-only memory (read-only memory, ROM), a flash memory, a hard disk drive (hard disk drive, HDD), or a solid-state drive (solid-state drive, SSD).

The storage 903 stores executable program code, and the processor 902 executes the executable program code to implement a function of the system management module 210 or the chassis management module 310, so as to implement a resource configuration method. In other words, the storage 903 stores some or all of computer program instructions used to perform the resource configuration method.

The communication interface 904 uses a transceiver module, for example, but not limited to, a network interface card and a transceiver, to implement communication between the computing device 900 and another device or a communication network.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk storage, a CD-ROM, an optical storage, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may alternatively be stored in a computer-readable storage that can instruct the computer or any other programmable data processing device to operate in a specific manner, so that the instructions stored in the computer-readable storage generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. In this case, if the modifications and variations made to this application fall within the scope of the claims of this application and equivalent technologies thereof, this application is intended to cover these modifications and variations.

## Claims

1. A resource configuration method, wherein the method is used to allocate a network resource to a host in a composable disaggregated infrastructure CDI-based computing system, the computing system further comprises a network resource, and the method comprises:
after completing initial resource configuration of the host, obtaining host resource update information configured by a user, wherein the host resource update information indicates a network resource that needs to be allocated to the host; and
in a running process of the host, adjusting, based on the host resource update information, a network resource allocated to the host, wherein the network resource allocated to the host is used to perform data transmission with the host or carry a data processing task that needs to be executed by the host.

2. The method according to claim 1, wherein the method further comprises:
providing a part or all of the following information:
occupation of the network resource in the computing system and the network resource configured for the host, wherein
the part or all of the information is used for presentation to the user.

3. The method according to claim 1 or 2, wherein the method further comprises:
obtaining shared information configured by the user, wherein the shared information indicates whether the network resource in the computing system supports sharing; and
configuring a shared resource for the network resource of the host based on the shared information, wherein the shared resource is a network resource, in the computing system, that is not configured for the host and that supports sharing, and the shared resource is used to share a data transmission task or a data processing task of the network resource of the host.

4. The method according to claim 3, wherein the computing system establishes a connection based on a CXL bus; and
the shared resource and the network resource of the host implement exchange of the data transmission task or the data processing task via a shared memory on the CXL bus.

5. The method according to claim 1 or 2, wherein the network resource comprises a plurality of intelligent network interface cards, the intelligent network interface card comprises a processor core and a virtual network interface card; and the following action is performed to complete the initial resource configuration of the host:
allocating the virtual network interface card on the intelligent network interface card to the host, wherein the virtual network interface card is configured to perform data transmission with the host; or
configuring a control plane function that needs to be undertaken by the processor core, wherein the control plane function comprises a part or all of the following: managing the virtual network interface card, carrying the data processing task that needs to be executed by the host, and scheduling, for the virtual network interface card, data that needs to be transmitted.

6. The method according to claim 5, wherein allocating the virtual network interface card on the intelligent network interface card to the host comprises:
allocating a plurality of virtual network interface cards to the host, wherein the plurality of virtual network interface cards comprise two virtual network interface cards on different intelligent network interface cards.

7. The method according to claim 5 or 6, wherein adjusting, based on the host resource update information, the network resource allocated to the host comprises:
adjusting, based on the host resource update information, the virtual network interface cards allocated to the host; or
adjusting, based on the host resource update information, the control plane function that needs to be undertaken by the processor core.

8. A resource configuration apparatus, wherein the resource configuration is configured to allocate a network resource to a host in a composable disaggregated infrastructure CDI-based computing system, the computing system further comprises a network resource, and the resource configuration apparatus comprises a system management module, wherein
the system management module is configured to: after completing initial resource configuration of the host, obtain host resource update information configured by a user, wherein the host resource update information indicates a network resource that needs to be allocated to the host; and in a running process of the host, adjust, based on the host resource update information, a network resource allocated to the host, wherein the network resource allocated to the host is used to perform data transmission with the host or carry a data processing task that needs to be executed by the host.

9. The apparatus according to claim 8, wherein the system management module is further configured to:
provide a part or all of the following information:
occupation of the network resource in the computing system and the network resource configured for the host, wherein
the part or all of the information is used for presentation to the user.

10. The apparatus according to claim 8 or 9, wherein the resource configuration apparatus further comprises a chassis management module;
the system management module is further configured to:
obtain shared information configured by the user, wherein the shared information indicates whether the network resource in the computing system supports sharing; and
the chassis management module is further configured to obtain the shared information from the system management module, and configure a shared resource for the network resource of the host based on the shared information, wherein the shared resource is a network resource, in the computing system, that is not configured for the host and that supports sharing, and the shared resource is used to share a data transmission task or a data processing task of the network resource of the host.

11. The apparatus according to claim 8 or 9, wherein the computing system establishes a connection based on a CXL bus, and that the shared resource is used to share the data transmission task or the data processing task of the network resource of the host comprises:
the shared resource and the network resource of the host implement exchange of the data transmission task or the data processing task via a shared memory on the CXL bus.

12. The apparatus according to claim 8 or 9, wherein the network resource comprises a plurality of intelligent network interface cards, the intelligent network interface card comprises a processor core and a virtual network interface card, and when completing the initial resource configuration of the host, the system management module is configured to:
allocate the virtual network interface card on the intelligent network interface card to the host, wherein the virtual network interface card is configured to perform data transmission with the host; or
configure a control plane function that needs to be undertaken by the processor core, wherein the control plane function comprises a part or all of the following: managing the virtual network interface card, carrying the data processing task that needs to be executed by the host, and scheduling, for the virtual network interface card, data that needs to be transmitted.

13. The apparatus according to claim 12, wherein the resource configuration apparatus further comprises a chassis management module; and
the system management module is configured to send a resource allocation request to the chassis management module based on resource information of the host, wherein the resource allocation request carries a resource parameter, and the resource parameter indicates a network resource that needs to be allocated to the host; and
the chassis management module is configured to receive the resource allocation request, allocate the virtual network interface card on the intelligent network interface card to the host based on the resource parameter, and configure the control plane function that needs to be undertaken by the processor core.

14. The apparatus according to claim 13, wherein that the chassis management module is configured to allocate the virtual network interface card on the intelligent network interface card to the host comprises:
allocating a plurality of virtual network interface cards to the host, wherein the plurality of virtual network interface cards comprise two virtual network interface cards on different intelligent network interface cards.

15. The apparatus according to claim 12 or 13, wherein when adjusting, based on the host resource update information, the network resource allocated to the host, the system management module is configured to:
adjust, based on the host resource update information, the virtual network interface cards allocated to the host; or
adjust, based on the host resource update information, the control plane function that needs to be undertaken by the processor core.

16. The apparatus according to claim 15, wherein the resource configuration apparatus further comprises the chassis management module;
the system management module is configured to send a resource adjustment request to the chassis management module based on the host resource update information, wherein the resource adjustment request carries a resource adjustment parameter, and the resource adjustment parameter indicates a network resource that needs to be adjusted for the host; and
the chassis management module is configured to receive the resource adjustment request, and adjust, based on the resource adjustment parameter, the virtual network interface card allocated to the host; or adjust the control plane function that needs to be undertaken by the processor core.

17. The apparatus according to any one of claims 8 to 16, wherein the computing system further comprises a switch, the switch is configured to connect the host and the network resource, and the system management module is deployed in the switch.

18. The apparatus according to any one of claims 10 to 17, wherein the computing system further comprises a resource chassis, and the network resource and the chassis management module are located in the resource chassis.

19. A computing system, wherein the computing system is a computing system based on a composable disaggregated infrastructure CDI, the computing system comprises a host, a switch, and a network resource chassis, the host is connected to the network resource chassis by using the switch, the network resource chassis comprises a network resource, and the switch comprises the system management module comprised in the resource configuration apparatus according to any one of claims 8 to 18.

20. The system according to claim 19, wherein the network resource chassis comprises a management device, and the management device comprises the chassis management module comprised in the resource configuration apparatus according to any one of claims 10 to 18.

21. A computing device, wherein the computing device comprises a processor and a storage; and
the processor of the at least one computing device is configured to execute instructions stored in the storage of the at least one computing device, to enable the computing device cluster to perform the method according to any one of claims 1 to 7.

22. A computer-readable storage medium, comprising computer program instructions, wherein when the computer program instructions are executed by a computing device cluster, the computing device cluster performs the method according to any one of claims 1 to 7.
